# EUROPEAN PATENT SPECIFICATION

(11) **EP 4 607 660 B1**
(45) Date of publication and mention of the grant of the patent: **04.11.2026**
(21) Application number: 23928328.6
(22) Date of filing: 24.10.2023
(51) Int. Cl.: H01M 50/147, H01M 50/593, H01M 50/591, H01M 50/588, H01M 50/15, H01M 50/202, H01M 50/691, H01M 50/14, H01M 50/184, H01M 50/186, H01M 50/627, H01M 50/342, H01M 50/176

(54) **BATTERY CELL, BATTERY, AND ELECTRIC DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(30) Priority: 17.03.2023 CN 202310265306
(43) Date of publication of application: 27.08.2025
(73) Proprietor: Contemporary Amperex Technology (Hong Kong) Limited, Hong Kong (HK)
(72) Inventor: XU, Liangfan, Ningde, Fujian 352100 (CN); ZHOU, Wenlin, Ningde, Fujian 352100 (CN); LI, Xing, Ningde, Fujian 352100 (CN); LI, Quankun, Ningde, Fujian 352100 (CN); JIN, Haizu, Ningde, Fujian 352100 (CN)
(74) Representative: Kraus & Lederer PartGmbB
(86) International application number: PCT/CN2023/126105
(87) International publication number: WO 2024/193024

(56) References cited:
- EP-A1- 2 645 446
- WO-A1-2018/056628
- CN-A- 112 531 299
- CN-U- 214 378 631
- CN-U- 217 361 738
- CN-U- 218 334 125
- CN-U- 218 482 358
- US-A1- 2011 070 473

## Description

### CROSS-REFERENCE TO RELATED APPLICATIONS

This application claims priority to Chinese Patent Application No. CN202310265306.9, entitled "BATTERY CELL, BATTERY, AND POWER CONSUMING DEVICE" and filed on March 17, 2023,

### TECHNICAL FIELD

This application relates to the field of battery technologies, and specifically, to a battery cell, a battery, and a power consuming device.

### BACKGROUND

Energy conservation and emission reduction are keys to the sustainable development of the automobile industry. Electric vehicles become an important part of the sustainable development of the automobile industry due to their advantages of energy conservation and environmental protection. For the electric vehicles, a battery technology is also an important factor related to the development of the electric vehicles.

During manufacturing of a battery, the reliability of the battery is an issue that cannot be ignored. Therefore, how to improve the reliability of the battery is a technical problem that needs to be urgently resolved in the battery technology. EP2645446A1 discloses a rechargeable battery comprising a hexahedral housing with a cap plate and a protective member covering the cap plate, the protective member including through-holes that expose electrode terminals, an electrolyte injection opening and a vent structure to improve safety and reliability. WO2018056628A1 discloses a secondary battery comprising a housing with an electrode assembly, a cap plate sealing the housing, and a cap insulating portion covering the cap plate with openings exposing electrode terminals, an electrolyte port and a vent structure.

### SUMMARY

This application provides a battery cell, a battery, and a power consuming device. A battery and a power consuming device to which the battery cell is applied have relatively high reliability.

This application is implemented through the following technical solutions.

According to a first aspect, an embodiment of this application provides a battery cell, including: a housing, an electrode terminal, and a protective member. The housing includes a first end wall; the electrode terminal is disposed on the first end wall; and the protective member covers an outer surface of the first end wall. A first through hole and a second through hole are provided on the protective member, the first through hole is configured to expose the electrode terminal, a drainage channel is formed between the protective member and the first end wall, and the drainage channel is in communication with the second through hole.

According to the battery cell in this embodiment of this application, the protective member is disposed on the outer surface of the first end wall, so that the protective member can cooperate with the first end wall to constrain liquid (for example, an electrolyte solution) located between the protective member and the first end wall. When liquid exists between the protective member and the first end wall, the liquid located between the protective member and the first end wall is drained through the drainage channel, so that the liquid between the protective member and the first end wall can be guided to the second through hole. The second through hole may correspond to a preset liquid discharging space, facilitating directional and in-time drainage of the liquid, to reduce risks of fire and explosion caused by a short circuit due to contact between the liquid and another conductive component, so as to improve the reliability of a battery and a power consuming device that are formed by the battery cell.

According to some embodiments of this application, the housing further includes a side wall, the side wall is disposed around the first end wall, the protective member includes a first part and a second part, the first part covers the outer surface of the first end wall, the second part is disposed around the first part, and the second part covers at least a part of an outer surface of the side wall.

In the foregoing embodiment, the first part covers the outer surface of the first end wall, and the second part is disposed around the first part and covers at least a part of the outer surface of the side wall, so that the protective member has a relatively good coverage effect on the first end wall, and the protective member can constrain the liquid through cooperation with the first end wall. In this way, the liquid located between the protective member and the first end wall is discharged from the second through hole.

According to some embodiments of this application, the drainage channel is provided between the first part and the first end wall.

In the foregoing embodiment, the drainage channel is provided at a position at which the liquid located between the first part and the first end wall can be drained to the second through hole through the drainage channel.

According to some embodiments of this application, the first end wall and the side wall are connected to form a first connection portion, and the protective member covers the first connection portion.

In the foregoing embodiment, if the first connection portion is cracked, the liquid inside the battery cell easily flows out through the cracked first connection portion. The protective member covers the first connection portion, and can constrain the liquid leaking through the cracked first connection portion, so that the liquid is directionally discharged through the second through hole, to reduce a safety risk caused by liquid leakage.

According to some embodiments of this application, the drainage channel includes a first sub-channel, the first sub-channel is provided along an edge of the first end wall, and the first connection portion is disposed around the first sub-channel.

In the foregoing embodiment, the first connection portion is disposed around the first sub-channel, and the first sub-channel may be close to the first connection portion, so that the liquid that flows out through the cracked first connection portion enters the first sub-channel, and is quickly discharged through the second through hole.

According to some embodiments of this application, a distance between the first connection portion and the first sub-channel is L1, and L1 satisfies: 1 mm≤L1≤4 mm.

In the foregoing embodiment, the distance between the first connection portion and the first sub-channel satisfies the foregoing relationship. It is convenient for the liquid that flows out through the cracked first connection portion to enter the first sub-channel. In addition, it is convenient for a connection between the first end wall and the side wall, so that the first connection portion has a relatively high strength. If the distance L1 between the first connection portion and the first sub-channel is relatively small (for example, less than 1 mm), the connection between the first end wall and the side wall is affected. For example, when the first end wall is soldered to the side wall, the first sub-channel is close to a joint between the first end wall and the side wall, affecting soldering between the first end wall and the side wall, and affecting the stability of the connection between the first end wall and the side wall. If the distance L1 between the first connection portion and the first sub-channel is relatively large (for example, greater than 4 mm), the liquid that flows out through the cracked first connection portion does not easily enter the first sub-channel, affecting a drainage effect.

According to some embodiments of this application, 2 mm≤L1≤3 mm.

In the foregoing embodiment, compared with L1<2 mm, when L1≥2 mm, an impact on the connection between the first end wall and the side wall can be reduced; and compared with L1>3 mm, when L1≤3 mm, the liquid that flows out through the cracked first connection portion can easily enter the first sub-channel, to drain the liquid.

According to some embodiments of this application, the drainage channel further includes a second sub-channel, and the second sub-channel communicates the first sub-channel with the second through hole.

In the foregoing embodiment, the second sub-channel communicates the first sub-channel with the second through hole, to drain the liquid located in the first sub-channel to the second through hole.

According to some embodiments of this application, the battery cell further includes a pressure relief mechanism, disposed on the first end wall, where the protective member covers the pressure relief mechanism.

In the foregoing embodiment, the protective member covers the pressure relief mechanism, and can constrain the liquid leaking from the pressure relief mechanism, so that the liquid is discharged through the second through hole.

According to some embodiments of this application, viewing along a thickness direction of the first end wall, the pressure relief mechanism at least partially overlaps with the second through hole.

In the foregoing embodiment, the pressure relief mechanism at least partially overlaps with the second through hole, so that the liquid located at the pressure relief mechanism is discharged through the second through hole in a timely manner.

According to some embodiments of this application, a gap exists between the pressure relief mechanism and the protective member along a thickness direction of the first end wall.

In the foregoing embodiment, the gap exists between the pressure relief mechanism and the protective member, which not only facilitates accumulation of the liquid in the gap between the pressure relief mechanism and the protective member, but also actuates the pressure relief mechanism to release pressure inside the battery cell.

According to some embodiments of this application, a liquid injection hole is provided on the first end wall, and the protective member covers the liquid injection hole.

In the foregoing embodiment, although the liquid injection hole is closed, a closed region of the liquid injection hole is easily damaged. The protective member covers the liquid injection hole, so that the liquid leaking through the liquid injection hole can be constrained, to guide the liquid to the second through hole to be discharged.

According to some embodiments of this application, the drainage channel further includes a third sub-channel, one end of the third sub-channel extends to the liquid injection hole, and the other end of the third sub-channel is in communication with the second through hole.

In the foregoing embodiment, the third sub-channel may be a communication bridge between the second through hole and the liquid injection hole, so that the liquid flowing out through the liquid injection hole flows to the second through hole.

According to some embodiments of this application, a drainage groove is provided on the outer surface of the first end wall, and the protective member covers the drainage groove to form the drainage channel.

In the foregoing embodiment, the drainage groove cooperates with the protective member to form the drainage channel. The drainage groove is easy to process and manufacture, which facilitates formation of the drainage channel.

According to some embodiments of this application, the battery cell further includes the pressure relief mechanism, disposed on the first end wall, where the protective member covers the pressure relief mechanism; and a groove is further provided on the outer surface of the first end wall, the pressure relief mechanism is disposed in the groove, and the drainage groove is in communication with the groove.

In the foregoing embodiment, a groove is provided on the outer surface of the first end wall, so that the pressure relief mechanism is disposed. The drainage groove is in communication with the groove, so that the liquid in the drainage groove and the liquid in the pressure relief mechanism can converge, to facilitate the liquid to be discharged from the second through hole.

According to some embodiments of this application, the battery cell further includes an adhesive layer, where the protective member and the first end wall are connected through the adhesive layer, and a region, between the protective member and the first end wall, in which the adhesive layer is not disposed forms the drainage channel.

In the foregoing embodiment, the adhesive layer implements a connection between the protective member and the first end wall, so that the protective member is firmly connected to the first end wall, and the region, between the protective member and the first end wall, in which the adhesive layer is not disposed forms the drainage channel, to facilitate processing and manufacturing, thereby reducing manufacturing difficulty.

According to some embodiments of this application, the housing further includes the side wall, the side wall is disposed around the first end wall, the first end wall and the side wall are connected to form the first connection portion, and viewing along the thickness direction of the first end wall, at least a part of the first connection portion overlaps with the drainage channel.

In the foregoing embodiment, at least a part of the first connection portion overlaps with the drainage channel, so that the liquid leaking from the first connection portion enters the drainage channel in a timely manner, and is guided from the drainage channel to the second through hole to be discharged.

According to some embodiments of this application, the housing further includes the side wall, the side wall is disposed around the first end wall, the protective member includes a first protective sub-member and a second protective sub-member, the first protective sub-member includes a body portion and a flange portion, the body portion covers at least a part of the outer surface of the side wall, the flange portion covers a part of the outer surface of the first end wall, and the second protective sub-member covers a part of the outer surface of the first end wall and a part of the flange portion.

In the foregoing embodiment, the first protective sub-member and the second protective sub-member are separately disposed, the body portion of the first protective sub-member covers a part of the outer surface of the side wall, the flange portion of the first protective sub-member covers a part of the outer surface of the first end wall, and the second protective sub-member covers a part of the outer surface of the first end wall and a part of the flange portion, to facilitate assembly between the protective member and the first end wall as well as the side wall, thereby reducing processing and manufacturing difficulty.

According to some embodiments of this application, the second protective sub-member is connected to the first end wall through the adhesive layer, and a region, between the second protective sub-member and the first end wall, in which the adhesive layer is not disposed forms the drainage channel.

In the foregoing embodiment, the drainage channel is located between the second protective sub-member and the first end wall, to facilitate formation of the drainage channel, thereby reducing processing and manufacturing difficulty.

According to some embodiments of this application, the first through hole and the second through hole are provided on the second protective sub-member.

In the foregoing embodiment, the first through hole and the second through hole are provided on the second protective sub-member, which not only facilitates assembly between the protective member and the first end wall, but also facilitates draining of the liquid between the protective member and the first end wall.

According to some embodiments of this application, the second protective sub-member and the flange portion are connected in a hot melting manner to form a second connection portion.

In the foregoing embodiment, the second protective sub-member and the flange portion are connected in a hot melting manner, so that the second protective sub-member is firmly connected to the flange portion, to reduce a risk that the liquid leaks through a joint between the second protective sub-member and the flange portion.

According to some embodiments of this application, one end of the flange portion that is away from the body portion extends out of the second connection portion.

In the foregoing embodiment, one end of the flange portion that is away from the body portion extends out of the second connection portion, so that the second protective sub-member and the flange portion are hot-melted, and a connection between the second protective sub-member and the flange portion is stable.

According to some embodiments of this application, the first end wall and the side wall are connected to form the first connection portion, the flange portion covers the first connection portion, and the first connection portion is disposed around the second connection portion.

In the foregoing embodiment, the first connection portion is disposed around the second connection portion, so that the protective member has a relatively good coverage effect on the first connection portion, to constrain the liquid that flows out through a cracked part of the first connection portion.

According to some embodiments of this application, the drainage channel includes the first sub-channel, the first sub-channel is provided along the edge of the first end wall, and the second connection portion is disposed around the first sub-channel.

In the foregoing embodiment, the second connection portion surrounds the first sub-channel, so that the liquid that flows out from the joint between the first end wall and the side wall converges into the first sub-channel.

According to some embodiments of this application, a distance between the second connection portion and the first sub-channel is D, and D satisfies: 5 mm≤D≤15 mm.

In the foregoing embodiment, the distance D between the second connection portion and the first sub-channel satisfies the foregoing relationship. Interference of the flange portion on the first sub-channel can be reduced. In addition, it is convenient for the liquid that flows out from the joint between the first end wall and the side wall to flow to the first sub-channel. If the distance D between the second connection portion and the first sub-channel is relatively small (for example, less than 5 mm), the relatively small distance between the second connection portion and the first sub-channel easily causes the flange portion to interfere with the first sub-channel, affecting a drainage effect. If the distance D between the second connection portion and the first sub-channel is relatively large (for example, greater than 15 mm), the relatively large distance between the first sub-channel and the joint between the first end wall and the side wall is not beneficial for the liquid that flows out from the joint between the first end wall and the side wall to flow to the first sub-channel.

According to some embodiments of this application, 7 mm≤D≤12 mm.

In the foregoing embodiment, compared with D<7 mm, when D≥7 mm, the second connection portion is relatively away from the first sub-channel, so that a risk of interference between the flange portion and the first sub-channel can be reduced. Compared with D>12 mm, when D≤12 mm, the first sub-channel may be relatively close to the joint between the first end wall and the side wall, so that the liquid that flows out from the joint between the first end wall and the side wall flows to the first sub-channel.

According to some embodiments of this application, viewing along the thickness direction of the first end wall, the drainage channel does not overlap with the flange portion.

In the foregoing embodiment, the drainage channel does not overlap with the flange portion, so that blocking of the flange portion to the drainage channel is reduced, and the drainage channel can have a relatively large drainage space, and have a relatively good drainage effect.

According to a second aspect, an embodiment of this application further provides a battery, including the battery cell according to any of the foregoing embodiments.

According to a third aspect, an embodiment of this application further provides a power consuming device, including the battery cell or the cell according to any of the foregoing embodiments.

The foregoing descriptions are only an overview of the technical solutions of this application. In order to better understand the technical means of this application, it can be practiced in accordance with the content of this specification, and in order to make the above and other objectives, features and advantages of this application more comprehensible, specific implementations of this application are particularly listed below.

### BRIEF DESCRIPTION OF THE DRAWINGS

In order to more clearly describe the technical solutions of embodiments of this application, the accompanying drawings that need to be used in the embodiments will be described briefly below. It should be understood that the following accompanying drawings illustrate only some embodiments of this application and should therefore not be construed as a limitation on the scope of this application. A person of ordinary skill in the art can also obtain other related accompanying drawings according to these accompanying drawings without any creative effort.
FIG. 1 is a schematic diagram of a structure of a vehicle according to some embodiments of this application;
FIG. 2 is a schematic exploded view of a structure of a battery according to some embodiments of this application;
FIG. 3 is a schematic exploded view of a structure of a battery cell according to some embodiments of this application;
FIG. 4 is a schematic diagram of a structure of a battery cell according to some embodiments of this application;
FIG. 5 is a schematic diagram of cooperation between a first end wall and a protective member according to some embodiments of this application;
FIG. 6 is a schematic diagram of cooperation between a first end wall and a protective member according to some other embodiments of this application;
FIG. 7 is a schematic diagram of assembly between a protective member and a housing according to some embodiments of this application;
FIG. 8 is a schematic diagram of a connection between a first end wall and a side wall according to some embodiments of this application;
FIG. 9 is a schematic diagram of a first connection portion and a first sub-channel according to some embodiments of this application;
FIG. 10 is a schematic diagram of a pressure relief mechanism and a second through hole according to some embodiments of this application;
FIG. 11 is a partially enlarged view of a position A in FIG. 10;
FIG. 12 is a schematic diagram of a structure of a first end wall according to some embodiments of this application;
FIG. 13 is a schematic diagram of assembly between a protective member and a housing according to some other embodiments of this application;
FIG. 14 is a schematic diagram of cooperation between a second protective member and a first end wall according to some embodiments of this application; and
FIG. 15 is a schematic diagram of a first connection portion and a second connection portion according to some embodiments of this application.

In the accompanying drawings, the figures are not drawn to actual scale.

List of reference numerals: 100-Battery; 10-box; 11-first sub-box; 12-second sub-box; 20-battery cell; 21-housing; 211-shell; 212-end cap; 213-first end wall; 2131-drainage groove; 2131a-first groove segment; 2131b-second groove segment; 2131c-third groove segment; 2132-groove; 2133-liquid injection hole; 2133a-first hole segment; 2133b-second hole segment; 214-side wall; 215-second end wall; 216-first connection portion; 22-electrode terminal; 23-protective member; 231-first through hole; 232-second through hole; 233-first part; 234-second part; 235-first protective sub-member; 2351-body portion; 2352-flange portion; 236-second protective sub-member; 237-second connection portion; 24-electrode assembly; 25-drainage channel; 251-first sub-channel; 252-second sub-channel; 253-third sub-channel; 26-pressure relief mechanism; 27-adhesive layer; 28-adapting member; 200-controller; 300-motor; 1000-vehicle; Q-gap; and Z-thickness direction.

### DETAILED DESCRIPTION

To make the objectives, technical solutions, and advantages of embodiments of this application clearer, the following clearly and completely describes the technical solutions in the embodiments of this application with reference to the accompanying drawings in the embodiments of this application. Apparently. the described embodiments are merely some rather than all of the embodiments of this application. All other embodiments obtained by a person of ordinary skill in the art based on the embodiments of this application without creative efforts shall fall within the protection scope of this application.

Unless otherwise defined, meanings of all technical and scientific terms used in this application are the same as those commonly understood by a person skilled in the art to which this application belongs; and the terms used in the descriptions of this application are merely for the purpose of describing specific embodiments, but are not intended to limit this application. The terms "comprise" and "have" and any variations thereof in the specification and the claims of this application as well as the descriptions of the accompanying drawings are intended to cover non-exclusive inclusion. The terms "first", "second" and the like in the specification and claims of this application or the above accompanying drawings are used to distinguish different objects, rather than to describe a specific order or primary-secondary relationship.

"Embodiment" mentioned in this application means that specific features, structures, or characteristics described with reference to the embodiment may be included in at least one embodiment of this application. The term appearing at different positions of the specification may not refer to the same embodiment or an independent or alternative embodiment that is mutually exclusive with another embodiment. A person skilled in the art explicitly or implicitly understands that the embodiments described in this application may be combined with other embodiments.

In the descriptions of this application, it should be noted that, unless otherwise expressly specified and limited, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. A person of ordinary skill in the art may understand the specific meanings of the foregoing terms in this application according to specific situations.

The term "and/or" in this application only describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In this application, "a plurality of means two or more (including two). Similarly, "a plurality of groups" means two or more groups (including two groups), and "a plurality of pieces" means two or more pieces (including two pieces).

In some embodiments, a battery may be a battery module. When there are a plurality of battery cells, the plurality of battery cells are arranged and fixed to form a battery module.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a part of the box may become at least a part of the floor of the vehicle, or a part of the box may become at least a part of a cross beam and a longitudinal beam of the vehicle.

In some embodiments, the battery may be an energy storage apparatus. The energy storage apparatus includes an energy storage container, an energy storage electric cabinet, or the like.

In the embodiments of this application, the battery cell may be a secondary battery. The secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this application.

The battery cell generally includes an electrode assembly. The electrode assembly includes a positive electrode, a negative electrode, and an isolating member. During charging and discharging of the battery cell, active ions (for example, lithium ions) are intercalated and deintercalated back and forth between the positive electrode and the negative electrode. The isolating member is disposed between the positive electrode and the negative electrode, and may serve to prevent a short circuit between the positive electrode and the negative electrode while allowing the active ions to pass through.

In some embodiments, the positive electrode may be a positive electrode plate, and the positive electrode plate may include a positive electrode current collector and a positive electrode active material disposed on at least one surface of the positive electrode current collector.

By way of example, the positive electrode current collector has two surfaces opposite to each other in a thickness direction of the positive electrode current collector, and the positive electrode active material is disposed on either or both of the two opposite surfaces of the positive electrode current collector.

By way of example, the positive electrode current collector may be a metal foil or a composite current collector. For example, the metal foil may be made of silver-surface-processed aluminum or stainless steel, stainless steel, copper, aluminum, nickel, a carbon electrode, carbon, nickel, or titanium. The composite current collector may include a polymer material base layer and a metal layer. The composite current collector may be formed by forming a metal material (such as aluminum, aluminum alloy, nickel, nickel alloy, titanium, titanium alloy, silver, or silver alloy) on a polymer material substrate (such as a substrate of polypropylene, polyethylene terephthalate, polybutylene terephthalate, polystyrene, or polyethylene).

By way of example, the positive electrode active material may include at least one of the following materials: a lithium-containing phosphate, a lithium transition metal oxide, and respective modified compounds thereof. However, this application is not limited to these materials, and other conventional materials that can be used as positive electrode active materials of batteries may also be used.

In some embodiments, the negative electrode may be a negative electrode plate, and the negative electrode plate may include a negative electrode current collector.

By way of example, the negative electrode current collector may be a metal foil or a composite current collector. For example, the metal foil may be made of silver-surface-processed aluminum or stainless steel, stainless steel, copper, aluminum, nickel, a carbon electrode, carbon, nickel, or titanium.

In some embodiments, the negative electrode current collector has two opposite surfaces in a thickness direction of the negative electrode current collector, and a negative electrode active material is disposed on either or both of the two opposite surfaces of the negative electrode current collector.

By way of example, the negative electrode active material may be a negative electrode active material used for a battery and well known in the art. By way of example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, or silicon alloy. The tin-based material may be selected from at least one of elemental tin, a tin-oxygen compound, or tin alloy. However, this application is not limited to these materials, and other conventional materials that can be used as negative electrode active materials of batteries may also be used. One type of these negative electrode active materials may be used individually, or two or more types of these negative electrode active materials may be used in combination.

In some implementations, the isolating member is a separator. There is no particular limitation on a type of the separator in this application, and any well-known separator with a porous structure that has good chemical stability and mechanical stability may be selected.

By way of example, a main material of the separator may be selected from at least one of glass fiber, non-woven fabric, polyethylene, polypropylene, polyvinylidene fluoride, or ceramic. The separator may be a single-layer film or a multi-layer composite film, which is not particularly limited. When the separator is the multi-layer composite film, a material in each layer may be identical or different, which is not particularly limited. The isolating member may be an independent component located between the positive electrode and the negative electrode, or may be attached to a surface of the positive electrode and a surface of the negative electrode.

In some implementations, the isolating member is a solid-state electrolyte. The solid-state electrolyte is disposed between the positive electrode and the negative electrode, and also serves to transmit ions and isolate the positive electrode from the negative electrode.

In some implementations, the electrode assembly is of a winding structure. The positive electrode plate and the negative electrode plate are wound into winding structures.

In some implementations, the electrode assembly is of a laminated structure.

In some implementations, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

In some implementations, the housing includes an end cap and a shell, an opening is provided on the shell, and the end cap closes the opening to form a closed space for accommodating materials such as the electrode assembly and the electrolyte. One or more openings may be provided on the shell. One or more end caps may also be disposed.

In some implementations, at least one electrode terminal is disposed on the housing, and the electrode terminal is electrically connected to a tab of the electrode assembly. The electrode terminal may be directly connected to the tab, or may be indirectly connected to the tab by using an adapting member. The electrode terminal may be disposed on the end cap, or may be disposed on the shell.

In some implementations, an explosion-proof valve is disposed on the housing. The explosion-proof valve is configured to release internal pressure of the battery cell.

By way of example, the battery cell may be a cylindrical battery cell, a prismatic battery cell, a soft packet battery cell, or a battery cell in another shape. The prismatic battery cell includes a square-shell battery cell, a blade-shaped battery cell, or a multi-prismatic battery. The multi-prismatic battery is, for example, a hexadecagonal prismatic battery. This is not specifically limited in the embodiments of this application.

Design factors in many aspects need to be all considered for the development of the battery technology, such as an energy density, a discharge capacity, a charge-discharge rate, and other performance parameters. In addition, the reliability of the battery also needs to be considered.

For ease of implementing an electrical connection to another component (such as a battery cell), the electrode terminal is generally disposed on a first end wall of the housing. The first end wall may be a wall of one end of the housing, or may be an end cap of the housing.

When the battery cell is inverted and used, the electrode terminal is located at a bottom of the battery cell. When the bottom of the battery cell is subject to an impact and the battery cell deforms, deformation of the battery cell easily causes damage to the housing or a connection portion between the housing and another component. For example, a joint between the end cap of the housing and the shell may be cracked, or a sealing position of a hole (such as a liquid injection hole, a hole in which the electrode terminal is mounted, or a hole in which a pressure relief mechanism is disposed) provided on the first end wall may be cracked. As a result, an electrolyte solution in the battery cell leaks, and the leaked electrolyte solution easily flows to another conductive component, causing a short circuit due to contact between the positive electrode and the negative electrode, and further causing safety risks such as fire and explosion. Consequently, the reliability of the battery is relatively low.

In view of this, to resolve a technical problem of relatively low reliability of the battery caused by the leakage of the electrolyte solution, this application provides a technical solution. A protective member is covered on an outer surface of the first end wall of the housing, the protective member exposes the electrode terminal, and a through hole for liquid discharging is provided on the protective member. When liquid appears between the first end wall and the protective member, the liquid can be discharged from the through hole, to implement directional liquid discharging, so that the battery has relatively high reliability.

When such a battery cell is used in a battery or a power consuming device, and when the battery cell is inverted and used, even if the bottom of the battery cell is subject to an impact and the battery cell deforms, because the protective member covers the first end wall, the liquid (for example, the electrolyte solution) near the first end wall is constrained between the protective member and the first end wall, and the liquid can be limited from flowing randomly, so that the liquid is discharged through the preset through hole that is provided on the protective member and that is configured for liquid discharging, to implement directional liquid discharging, thereby reducing a risk of a short circuit between the positive electrode and the negative electrode caused by contact between the liquid and another conductive component, and improving the reliability of the battery and the power consuming device that are formed by the battery cell.

The battery cell disclosed in the embodiments of this application may be used in, but is not limited to, a power consuming device such as a vehicle, a ship, or an aircraft. The battery cell or the battery disclosed in this application may be used to form a power supply system of the power consuming device.

The embodiments of this application provide a power consuming device using a battery as a power supply. The power consuming device may include, but is not limited to, a mobile phone, a tablet computer, a notebook computer, an electric toy, an electric tool, an electric bicycle, an electric motorcycle, an electric vehicle, a ship, a spacecraft, or the like. The electric toy may include a fixed or mobile electric toy, such as a game console, an electric vehicle toy, an electric ship toy, or an electric airplane toy. The spacecraft may include an airplane, a rocket, a space shuttle, a spaceship, or the like.

For ease of description, the power consuming device being a vehicle 1000 in an embodiment of this application is used as an example to describe the following embodiments.

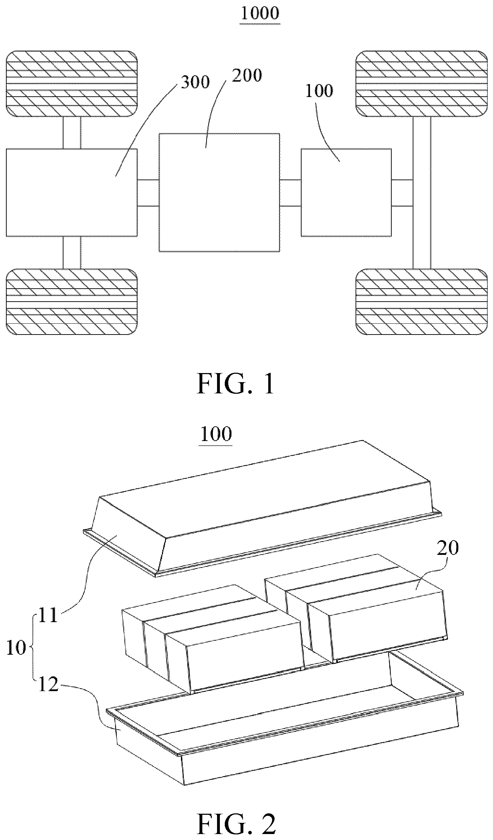

FIG. 1 is a schematic diagram of a structure of a vehicle according to some embodiments of this application. The vehicle 1000 may be a fuel powered vehicle, a gas powered vehicle, or a new energy vehicle, and the new energy vehicle may be a pure electric vehicle, a hybrid electric vehicle, or an extended-range vehicle. A battery 100 is disposed inside the vehicle 1000, and the battery 100 may be disposed at a bottom, head, or tail of the vehicle 1000. The battery 100 may be configured to supply power to the vehicle 1000. For example, the battery 100 may serve as an operating power supply of the vehicle 1000, and is used in a circuit system of the vehicle 1000. For example, the battery 100 is configured for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of this application, the battery 100 may serve not only as an operating power supply of the vehicle 1000, but also as a driving power supply of the vehicle 1000, to alternatively or partially replace fuel or natural gas to provide driving power for the vehicle 1000.

FIG. 2 is a schematic exploded view of a structure of a battery according to some embodiments of this application. A battery 100 may include a box 10 and a battery cell 20, where the battery cell 20 is accommodated in the box 10. The box 10 is configured to provide an accommodating space for the battery cell 20. The box 10 may use a plurality of structures. In some embodiments, the box 10 may include a first sub-box 11 and a second sub-box 12, the first sub-box 11 and the second sub-box 12 cover each other, and the first sub-box 11 and the second sub-box 12 jointly define the accommodating space for accommodating the battery cell 20. The second sub-box 12 may be a hollow structure being open on one side, the first sub-box 11 may be a plate-shaped structure, and the first sub-box 11 covers an open side of the second sub-box 12, so that the first sub-box 11 and the second sub-box 12 jointly define the accommodating space. Alternatively, each of the first sub-box 11 and the second sub-box 12 may be a hollow structure being open on one side, and an open side of the first sub-box 11 covers an open side of the second sub-box 12.

In the battery 100, there may be a plurality of battery cells 20, and the plurality of battery cells 20 may be connected in series, parallel, or series-parallel, where series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the box 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and accommodated in the box 10. The battery 100 may also include other structures, for example, the battery 100 may further include a bus component for implementing an electrical connection between the plurality of battery cells 20.

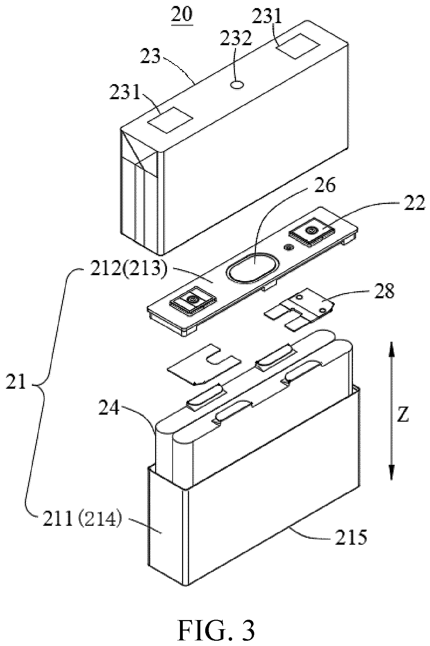

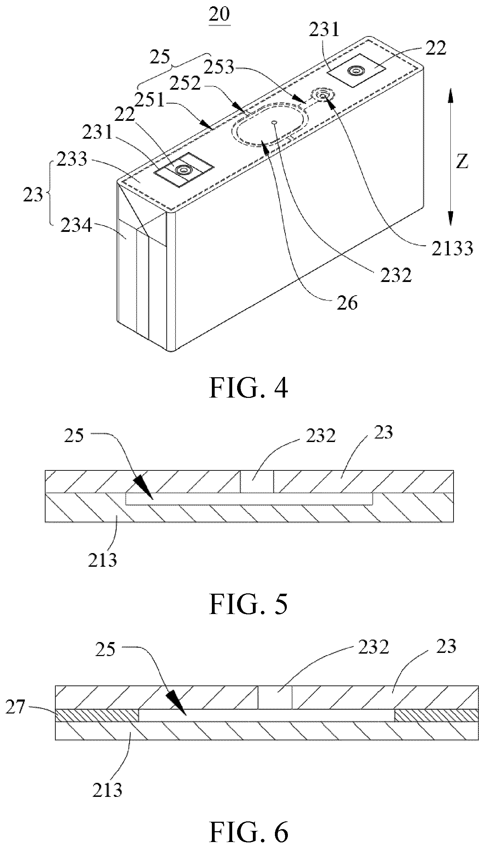

Referring to FIG. 3 to FIG. 6, FIG. 3 is a schematic exploded view of a structure of a battery cell according to some embodiments of this application; FIG. 4 is a schematic diagram of a structure of a battery cell according to some embodiments of this application; FIG. 5 is a schematic diagram of cooperation between a first end wall and a protective member according to some embodiments of this application; and FIG. 6 is a schematic diagram of cooperation between a first end wall and a protective member according to some other embodiments of this application. As shown in FIG. 3 and FIG. 4, the battery cell 20 includes a housing 21, an electrode terminal 22, and a protective member 23. The housing 21 includes a first end wall 213, the electrode terminal 22 is disposed on the first end wall 213, and the protective member 23 covers an outer surface of the first end wall 213. A first through hole 231 and a second through hole 232 are provided on the protective member 23, the first through hole 231 is configured to expose the electrode terminal 22, a drainage channel 25 is formed between the protective member 23 and the first end wall 213, and the drainage channel 25 is in communication with the second through hole 232.

The housing 21 includes a shell 211 and an end cap 212. The shell 211 has an opening, and the end cap 212 closes the opening, to isolate an internal environment of the battery cell 20 from an external environment. The end cap 212 and the shell 211 are connected to form an accommodating space.

The battery cell 20 may further include an electrode assembly 24 and an adapting member 28. The electrode assembly 24 is disposed in the accommodating space of the housing 21. The adapting member 28 is configured to implement an electrical connection between the electrode assembly 24 and the electrode terminal 22.

The shell 211 is an assembly configured to form the internal environment of the battery cell 20 together with the end cap 212, where the formed internal environment may be configured to accommodate the electrode assembly 24, an electrolyte solution, and other components. The shell 211 and the end cap 212 may be independent components. The shell 211 may have a plurality of shapes and sizes. Specifically, a shape of the shell 211 may be determined according to a specific shape and size of the electrode assembly 24. The shell 211 may be made of a plurality of materials, such as copper, iron, aluminum, stainless steel, aluminum alloy, or plastic, which is not particularly limited in the embodiments of this application. The embodiments of this application are described by using an example in which the shell 211 is in a shape of a cuboid.

The end cap 212 refers to a component that covers the opening of the shell 211 to isolate the internal environment of the battery cell 20 from the external environment. A shape of the end cap 212 is not limited and may be adapted to the shape of the shell 211 to fit the shell 211. Optionally, the end cap 212 may be made of a material with specified hardness and strength (for example, aluminum alloy), so that the end cap 212 is less likely to deform under extrusion and collision, enabling the battery cell 20 to have higher structural strength and enhanced safety performance. A functional component such as the electrode terminal 22 may be disposed on the end cap 212. The electrode terminal 22 may be configured to be electrically connected to the electrode assembly 24, to output or input electric energy of the battery cell 20. The end cap 212 may also be made of a plurality of materials, such as copper, iron, aluminum, stainless steel, aluminum alloy, or plastic, which is not particularly limited in the embodiments of this application. In some embodiments, an insulating structure may be further disposed on an inner side of the end cap 212. The insulating structure may be configured to isolate electrical connection components in the shell 211 from the end cap 212, to reduce a risk of a short circuit. For example, the insulating structure may be made of plastic or rubber.

The first end wall 213 is a wall of the housing 21 that encloses the accommodating space. That is, the first end wall 213 and another wall of the housing 21 enclose the accommodating space configured to accommodate the electrode assembly 24. The first end wall 213 may be the end cap 212, or may be a wall of the shell 211, for example, a wall of the shell 211 away from the opening.

In some embodiments, the first end wall 213 may be the end cap 212.

The protective member 23 may be a component that performs an electrical isolation function. The protective member 23 is disposed on an outer surface of the housing 21, to electrically isolate the housing 21 from other components, thereby reducing a risk of a short circuit due to contact between a positive electrode and a negative electrode.

The first through hole 231 and the second through hole 232 are through holes provided on the protective member 23. The first through hole 231 and the second through hole 232 may run through the protective member 23 along a thickness direction of the first end wall 213. To be specific, the first through hole 231 and the second through hole 232 may run through a surface of the protective member 23 that faces the first end wall 213 and a surface of the protective member 23 that faces away from the first end wall 213. The electrode terminal 22 is disposed in the first through hole 231, and is exposed from the first through hole 231, to be electrically connected to another conductive component, thereby exporting the electric energy of the battery cell 20. The second through hole 232 can discharge liquid between the protective member 23 and the first end wall 213, so that the liquid is directionally discharged.

In the figure, a direction indicated by a letter Z is the thickness direction of the first end wall 213.

In this application, the liquid may be at least one of an electrolyte solution, an additive, or a condensate.

During use, the first end wall 213 may be located at a bottom of the battery cell 20. In this case, the battery cell 20 is inverted and used. The second through hole 232 may correspond to a collection region of the battery 100 or a power consuming device, so that the liquid is discharged to the collection region, to reduce a risk that the liquid comes into contact with another conductive component.

In this application, the protective member 23 may cover most regions of the outer surface of the first end wall 213, and the most regions may be regions of the outer surface of the first end wall 213 other than regions corresponding to the first through hole 231 and the second through hole 232.

The outer surface of the first end wall 213 may be a surface of the first end wall 213 that faces away from the inside of the battery cell 20, that is, the outer surface of the first end wall 213 may be a surface of the first end wall 213 that faces away from the accommodating space.

The drainage channel 25 is a channel that is provided between the first end wall 213 and the protective member 23 and that is configured to guide liquid to flow. The second through hole 232 is in communication with the drainage channel 25. After the liquid flows into the drainage channel 25, the liquid can flow to the second through hole 232 through the drainage channel 25.

As shown in FIG. 5, the drainage channel 25 may be a space formed through cooperation between a groove provided on the outer surface of the first end wall 213 and the protective member 23. Alternatively, as shown in FIG. 6, the drainage channel 25 may be a space formed by regions that are not connected between the first end wall 213 and the protective member 23. For example, the first end wall 213 may be connected to the protective member 23 by using an adhesive layer 27, and a region, between the first end wall 213 and the protective member 23, in which the adhesive layer 27 is not disposed may be the drainage channel 25.

When liquid is formed between the first end wall 213 and the protective member 23, as the liquid increases, the liquid can flow to the second through hole 232 and be discharged from the second through hole 232. The liquid located between the protective member 23 and the first end wall 213 is drained by using the drainage channel 25, so that the liquid between the protective member 23 and the first end wall 213 can be guided to the second through hole 232, and the liquid is discharged in a timely manner.

According to the battery cell 20 in the embodiments of this application, when the battery cell 20 is inverted and used, the first end wall 213 is located at the bottom of the battery cell 20. When the bottom of the battery cell 20 is subject to an impact, the first end wall 213 easily deforms, causing the liquid inside the battery cell 20 to flow out through the first end wall 213 damaged by deformation. The liquid is easily constrained by the space between the protective member 23 and the first end wall 213. The liquid located between the protective member 23 and the first end wall 213 is drained by using the drainage channel 25, so that the liquid between the protective member 23 and the first end wall 213 can be guided to the second through hole 232 to be discharged, to implement directional and in-time liquid discharging. Because the liquid is directionally discharged through the second through hole 232, a flow direction of the liquid can be constrained, and a risk of fire or explosion caused by a short circuit due to contact between the liquid and the another conductive component is reduced, so that the reliability of the battery 100 and the power consuming device that are formed by the battery cell 20 can be improved.

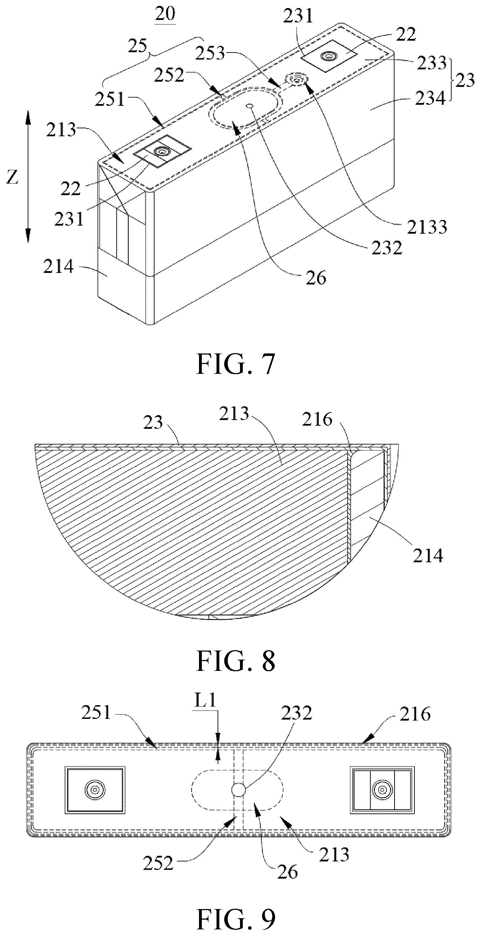

Referring to FIG. 3 and FIG. 4, and further referring to FIG. 7, FIG. 7 is a schematic diagram of assembly between a protective member and a housing according to some embodiments of this application. According to some embodiments of this application, the housing 21 further includes a side wall 214, the side wall 214 is disposed around the first end wall 213, the protective member 23 includes a first part 233 and a second part 234, the first part 233 covers the outer surface of the first end wall 213, the second part 234 is disposed around the first part 233, and the second part 234 covers at least a part of an outer surface of the side wall 214.

The side wall 214 is a wall that is of the housing 21 and that encloses the accommodating space. The side wall 214 is disposed around the first end wall 213, and cooperates with the first end wall 213 to enclose the accommodating space. The side wall 214 may be a wall of the shell 211, and the side wall 214 may be disposed around the opening of the shell 211.

The first part 233 and the second part 234 are forming parts of the protective member 23.

In some embodiments, the first part 233 and the second part 234 may be integrally formed.

The first part 233 covers the outer surface of the first end wall 213. To be specific, the first part 233 may be located on a side of the first end wall 213 that faces away from the inside of the battery cell 20.

As shown in FIG. 4, the second part 234 covers the whole outer surface of the side wall 214. As shown in FIG. 7, the second part 234 covers a part of the outer surface of the side wall 214.

In the foregoing embodiment, the first part 233 covers the outer surface of the first end wall 213, and the second part 234 is disposed around the first part 233 and covers at least a part of the outer surface of the side wall 214, so that the protective member 23 has a relatively good coverage effect on the first end wall 213, and the protective member 23 can constrain the liquid through cooperation with the first end wall 213. In this way, the liquid located between the protective member 23 and the first end wall 213 is discharged from the second through hole 232.

Referring to FIG. 3 and FIG. 4, according to some embodiments of this application, the housing 21 may further include a second end wall 215. The second end wall 215 is disposed opposite to the first end wall 213 along a thickness direction Z of the first end wall 213. The side wall 214 is disposed around the second end wall 215. The protective member 23 may cover a part of the second end wall 215, or the protective member 23 may cover the whole second end wall 215.

Referring to FIG. 5 and FIG. 6, according to some embodiments of this application, the drainage channel 25 is provided between the first part 233 and the first end wall 213.

The drainage channel 25 may be formed by the first part 233 and the first end wall 213. For example, a surface of the first part 233 that faces the first end wall 213 and the outer surface of the first end wall 213 may form the drainage channel 25. Alternatively, a surface of the first part 233 that faces the first end wall 213 and a groove provided on the first end wall 213 may form the drainage channel 25.

The drainage channel 25 is provided between the first part 233 and the first end wall 213, so that liquid located between the first part 233 and the first end wall 213 can be drained to the second through hole 232 through the drainage channel 25.

In some embodiments, the drainage channel 25 may alternatively be provided between the second part 234 and the first end wall 213.

FIG. 8 is a schematic diagram of a connection between a first end wall and a side wall according to some embodiments of this application. According to some embodiments of this application, the first end wall 213 and the side wall 214 are connected to form a first connection portion 216, and the protective member 23 covers the first connection portion 216.

The first connection portion 216 may be a weld formed by soldering between the first end wall 213 and the side wall 214, so that the first end wall 213 is firmly connected to the side wall 214.

That the protective member 23 covers the first connection portion 216 may be that the first part 233 covers the first connection portion 216.

In the foregoing embodiment, if the first connection portion 216 is cracked, for example, pseudo soldering occurs at a joint between the first end wall 213 and the side wall 214, and the first connection portion 216 is easily cracked by a force, the liquid inside the battery cell 20 easily leaks out through the cracked first connection portion 216. The protective member 23 covers the first connection portion 216 and can constrain the liquid that leaks out through the cracked first connection portion 216, so that the liquid is directionally discharged through the second through hole 232, to reduce a safety risk caused by the liquid leakage.

Referring to FIG. 4, and further referring to FIG. 9, FIG. 9 is a schematic diagram of a first connection portion and a first sub-channel according to some embodiments of this application. According to some embodiments of this application, the drainage channel 25 includes a first sub-channel 251, the first sub-channel 251 is provided along an edge of the first end wall 213, and the first connection portion 216 is disposed around the first sub-channel 251.

The first sub-channel 251 may be an annular channel provided along the edge of the first end wall 213.

The first connection portion 216 is disposed around the first sub-channel 251, and the first sub-channel 251 may be close to the first connection portion 216, so that the liquid that flows out through the cracked first connection portion 216 enters the first sub-channel 251, and is quickly discharged through the second through hole 232.

Referring to FIG. 9, according to some embodiments of this application, a distance between the first connection portion 216 and the first sub-channel 251 is L1, and L1 satisfies: 1 mm≤L1≤4 mm.

The distance L1 between the first connection portion 216 and the first sub-channel 251 may be a minimum distance between the first connection portion 216 and the first sub-channel 251. For example, on a plane perpendicular to an extension direction of the first sub-channel 251, a minimum distance between an edge of the first connection portion 216 and an edge of the first sub-channel 251 may be the distance between the first connection portion 216 and the first sub-channel 251.

In an embodiment in which the first sub-channel 251 is formed by cooperation between the groove provided on the first end wall 213 and the protective member 23, a distance between the groove and the edge of the first end wall 213 may be the distance between the first connection portion 216 and the first sub-channel 251, so that the distance between the groove and the edge of the first end wall 213 is not likely to be small. Otherwise, soldering between the first end wall 213 and the side wall 214 is affected.

Optionally, L1 may be 1 mm, 1.5 mm, 2 mm, 2.5 mm, 3 mm, 3.5 mm, or 4 mm. L1 may alternatively be any value between 1 mm and 4 mm.

If the distance L1 between the first connection portion 216 and the first sub-channel 251 is relatively small (for example, less than 1 mm), the connection between the first end wall 213 and the side wall 214 is affected. For example, when the first end wall 213 is soldered to the side wall 214, the first sub-channel 251 is close to a joint between the first end wall 213 and the side wall 214, soldering between the first end wall 213 and the side wall 214 is affected, and the stability of the connection between the first end wall 213 and the side wall 214 is affected. If the distance L1 between the first connection portion 216 and the first sub-channel 251 is relatively large (for example, greater than 4 mm), the liquid that flows out through the cracked first connection portion 216 does not easily enter the first sub-channel 251, affecting a drainage effect.

In the foregoing embodiment, the distance L1 between the first connection portion 216 and the first sub-channel 251 satisfies the foregoing relationship. It is convenient for the liquid that flows out through the cracked first connection portion 216 to enter the first sub-channel 251. In addition, it is convenient for the connection between the first end wall 213 and the side wall 214, so that the first connection portion 216 has a relatively high strength.

According to some embodiments of this application, 2 mm≤L1≤3 mm.

Optionally, L1 may be 2 mm, 2.1 mm, 2.2 mm, 2.3 mm, 2.4 mm, 2.5 mm, 2.6 mm, 2.7 mm, 2.8 mm, 2.9 mm, or 3 mm.

Compared with L1<2 mm, when L1≥2 mm, an impact on the connection between the first end wall 213 and the side wall 214 can be reduced. Compared with L1>3 mm, when L1≤3 mm, the liquid that flows out through the cracked first connection portion 216 can easily enter the first sub-channel 251, to drain the liquid.

Referring to FIG. 4 and FIG. 9, according to some embodiments of this application, the drainage channel 25 may further include a second sub-channel 252, and the second sub-channel 252 communicates the first sub-channel 251 with the second through hole 232.

The second sub-channel 252 is a forming part of the drainage channel 25. The second sub-channel 252 communicates the first sub-channel 251 with the second through hole 232, to drain liquid located in the first sub-channel 251 to the second through hole 232.

Referring to FIG. 3, FIG. 4, and FIG. 9, according to some embodiments of this application, the battery cell 20 may further include a pressure relief mechanism 26, and the pressure relief mechanism 26 is disposed on the first end wall 213, where the protective member 23 covers the pressure relief mechanism 26.

The pressure relief mechanism 26 may be a component configured, when internal pressure or temperature of the battery cell 20 reaches a threshold, to be actuated to release the internal pressure of the battery cell 20.

The pressure relief mechanism 26 is disposed on the first end wall 213. For example, the pressure relief mechanism 26 may be disposed on the end cap 212, or may be disposed on the shell 211. In some embodiments, as shown in FIG. 3, the pressure relief mechanism 26 is disposed on the end cap 212. For example, the pressure relief mechanism 26 may be soldered to the end cap 212.

The liquid may leak from a weak region of the pressure relief mechanism 26, or may leak from a connecting position between the pressure relief mechanism 26 and the first end wall 213. All the foregoing leakage manners belong to leakage from the pressure relief mechanism 26.

The protective member 23 covers the pressure relief mechanism 26, and also covers the connecting position between the pressure relief mechanism 26 and the first end wall 213, so that when the liquid leaks from the pressure relief mechanism 26, the protective member 23 can guide the liquid to be discharged from the second through hole 232.

The pressure relief mechanism 26 may be a weak part relative to the housing 21, and the liquid easily leaks from the pressure relief mechanism 26. The protective member 23 covers the pressure relief mechanism 26, and can constrain the liquid leaking from the pressure relief mechanism 26, so that the liquid is discharged through the second through hole 232.

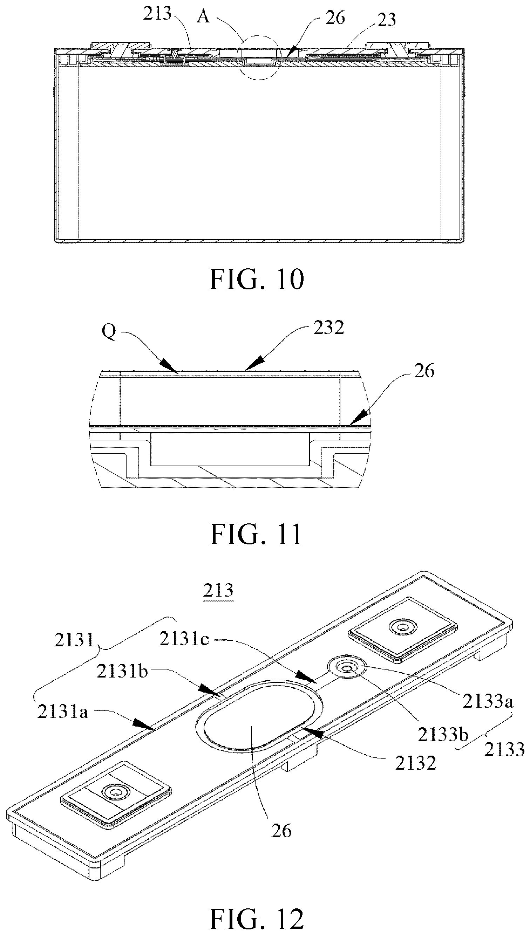

FIG. 10 is a schematic diagram of a pressure relief mechanism and a second through hole according to some embodiments of this application. FIG. 11 is a partially enlarged view of a position A in FIG. 10. According to some embodiments of this application, viewing along a thickness direction Z of the first end wall 213, the pressure relief mechanism 26 at least partially overlaps with the second through hole 232.

That the pressure relief mechanism 26 at least partially overlaps with the second through hole 232 may be that the pressure relief mechanism 26 overlaps with a part of the second through hole 232, or may be that the pressure relief mechanism 26 overlaps with the whole second through hole 232.

In this case, the liquid leaking through the pressure relief mechanism 26 can quickly flow to the second through hole 232 and be discharged in a timely manner.

Referring to FIG. 11, according to some embodiments of this application, a gap Q exists between the pressure relief mechanism 26 and the protective member 23 along a thickness direction Z of the first end wall 213.

The gap Q exists between the pressure relief mechanism 26 and the protective member 23 along the thickness direction Z of the first end wall 213, which may be that the pressure relief mechanism 26 is away from the protective member 23 relative to the outer surface of the first end wall 213. To be specific, a recess region is disposed on the outer surface of the first end wall 213, the pressure relief mechanism 26 is disposed in the recess region, and an outer surface of the pressure relief mechanism 26 does not protrude from the outer surface of the first end wall 213.

In the foregoing embodiment, the gap Q exists between the pressure relief mechanism 26 and the protective member 23, which not only facilitates accumulation of the liquid in the gap Q between the pressure relief mechanism 26 and the protective member 23, but also actuates the pressure relief mechanism 26 to release pressure inside the battery cell 20.

Referring to FIG. 4 and FIG. 12, FIG. 12 is a schematic diagram of a structure of a first end wall according to some embodiments of this application. According to some embodiments of this application, a liquid injection hole 2133 is provided on the first end wall 213, and the protective member 23 covers the liquid injection hole 2133.

The liquid injection hole 2133 is a through hole provided on the first end wall 213, and the liquid injection hole 2133 runs through the first end wall 213 along the thickness direction Z of the first end wall 213. An electrolyte solution may be injected into the inside of the battery cell 20 through the liquid injection hole 2133. In an assembly process of the battery cell 20, after the injection of the electrolyte solution is completed, the liquid injection hole 2133 is sealed by a sealing member (not shown in the figure), to reduce a risk of leakage of the electrolyte solution. A sealing region between the liquid injection hole 2133 and the sealing member is a weak region. When a force is applied to the first end wall 213, a sealing interface between the liquid injection hole 2133 and the sealing member is easily damaged, and the liquid easily leaks from the sealing interface between the liquid injection hole 2133 and the sealing member. That is, the liquid easily leaks from the liquid injection hole 2133.

In the foregoing embodiment, although the liquid injection hole 2133 is closed, a closed region (the sealing interface between the liquid injection hole 2133 and the sealing member) of the liquid injection hole 2133 is easily damaged. The protective member 23 covers the liquid injection hole 2133 and can constrain the liquid leaking through the liquid injection hole 2133, to guide the liquid to the second through hole 232 to be discharged.

Referring to FIG. 4 and FIG. 12, according to some embodiments of this application, the drainage channel 25 further includes a third sub-channel 253, one end of the third sub-channel 253 extends to the liquid injection hole 2133, and the other end of the third sub-channel 253 is in communication with the second through hole 232.

In the foregoing embodiment, the third sub-channel 253 may be a communication bridge between the second through hole 232 and the liquid injection hole 2133, so that the liquid that flows out through the liquid injection hole 2133 flows to the second through hole 232.

In some embodiments, as shown in FIG. 12, the liquid injection hole 2133 may be a step hole. The liquid injection hole 2133 may include a first hole segment 2133a and a second hole segment 2133b. The first hole segment 2133a may be provided around the second hole segment 2133b. A cross-sectional area of the first hole segment 2133a is greater than a cross-sectional area of the second hole segment 2133b. The first hole segment 2133a is closer to the outer surface of the first end wall 213 than the second hole segment 2133b. The second hole segment 2133b is configured to be sealed by the sealing member.

According to some embodiments of this application, viewing along the thickness direction Z of the first end wall 213, the second through hole 232 may at least partially overlap with the liquid injection hole 2133. In this case, the liquid leaking through the liquid injection hole 2133 may quickly flow to the second through hole 232 and be discharged from the second through hole 232.

Referring to FIG. 4 and FIG. 5, and further referring to FIG. 12, according to some embodiments of this application, a drainage groove 2131 is provided on the outer surface of the first end wall 213, and the protective member 23 covers the drainage groove 2131 to form the drainage channel 25.

The drainage groove 2131 may be a groove provided on the outer surface of the first end wall 213. The drainage groove 2131 may be formed by recessing of the outer surface of the first end wall 213 toward an inner surface of the first end wall 213. The inner surface of the first end wall 213 may be a surface configured to enclose an accommodating space.

That the protective member 23 covers the drainage groove 2131 may be that the protective member 23 is attached to the outer surface of the first end wall 213 and covers an opening of the drainage groove 2131.

The drainage groove 2131 cooperates with the protective member 23 to form the drainage channel 25. The drainage groove 2131 is easy to process and manufacture, which facilitates formation of the drainage channel 25.

In an embodiment in which the first end wall 213 and the side wall 214 are connected to form the first connection portion 216, a part of the drainage groove 2131 may be provided close to the first connection portion 216, and the first connection portion 216 is disposed around the drainage groove 2131, so that the liquid leaking through the joint between the first end wall 213 and the side wall 214 flows into the drainage groove 2131, and the drainage groove 2131 guides the liquid to the second through hole 232.

When a part of the drainage groove 2131 is provided close to the first connection portion 216, a part that is covered by the protective member 23 and that is of the drainage groove 2131 close to the first connection portion 216 may form the first sub-channel 251 of the drainage channel 25. A distance between the part of the drainage groove 2131 close to the first connection portion 216 and an edge of the first end wall 213 may be the distance between the first connection portion 216 and the first sub-channel 251.

Referring to FIG. 12, according to some embodiments of this application, the battery cell 20 may further include the pressure relief mechanism 26. The pressure relief mechanism 26 is disposed on the first end wall 213, where the protective member 23 covers the pressure relief mechanism 26. A groove 2132 is further provided on the outer surface of the first end wall 213, the pressure relief mechanism 26 is disposed in the groove 2132, and the drainage groove 2131 is in communication with the groove 2132.

For a cooperation manner between the pressure relief mechanism 26 and the protective member 23, reference may be made to the foregoing embodiments including the pressure relief mechanism 26.

The groove 2132 may be a groove provided on the outer surface of the first end wall 213. The groove 2132 is in communication with the drainage groove 2131, and the liquid in the drainage groove 2131 can flow to the groove 2132.

The pressure relief mechanism 26 is disposed in the groove 2132. The pressure relief mechanism 26 may be connected to a bottom wall of the groove 2132, or the pressure relief mechanism 26 may be a part of the bottom wall of the groove 2132.

The protective member 23 covers the groove 2132, and the protective member 23, the groove 2132, and the drainage groove 2131 may form the drainage channel 25.

The groove 2132 is provided on the outer surface of the first end wall 213, so that the pressure relief mechanism 26 is disposed. The drainage groove 2131 is in communication with the groove 2132, so that the liquid in the drainage groove 2131 and the liquid in the pressure relief mechanism 26 can converge, to facilitate the liquid to be discharged from the second through hole 232.

Referring to FIG. 4 and FIG. 12, according to some embodiments of this application, the drainage groove 2131 may include a first groove segment 2131a and a second groove segment 2131b. The first groove segment 2131a is provided along the edge of the first end wall 213. The first groove segment 2131a cooperates with the protective member 23 to form the first sub-channel 251. The second groove segment 2131b communicates the first groove segment 2131a with the groove 2132. The protective member 23 covers the second groove segment 2131b to form the second sub-channel 252. The second sub-channel 252 communicates the first sub-channel 251 with the second through hole 232.

In some embodiments, a cross section of the drainage groove 2131 may be U-shaped, V-shaped, rectangular, special-shaped, or the like. Optionally, the cross section of the drainage groove 2131 is U-shaped, to facilitate processing, and a cross-sectional area is relatively large. It should be noted that, the cross section of the groove may be a cross section obtained by a plane perpendicular to an extension direction of the groove.

In some embodiments, in an embodiment in which the liquid injection hole 2133 is provided on the first end wall 213, the drainage groove 2131 may further include a third groove segment 2131c. One end of the third groove segment 2131c may be in communication with the groove 2132, and the other end of the third groove segment 2131c may extend to the first hole segment 2133a of the liquid injection hole 2133. The protective member 23 covers the third groove segment 2131c to form the third sub-channel 253.

Referring to FIG. 4 and FIG. 12, in some embodiments, the protective member 23 may be an insulating film. In an embodiment in which the housing 21 further includes the second end wall 215, the insulating film may cover the outer surface of the first end wall 213, the outer surface of the side wall 214, and a part of the outer surface of the second end wall 215. The first through hole 231 and the second through hole 232 are provided on the insulating film. The first through hole 231 exposes the electrode terminal 22. The second through hole 232 is configured to discharge liquid between the insulating film and the first end wall 213.

Referring to FIG. 6, according to some embodiments of this application, the battery cell 20 further includes an adhesive layer 27. The protective member 23 and the first end wall 213 are connected through the adhesive layer 27, and a region, between the protective member 23 and the first end wall 213, in which the adhesive layer 27 is not disposed forms the drainage channel 25.

The adhesive layer 27 may be an adhesive disposed between the first end wall 213 and the protective member 23, so that the protective member 23 is adhered to the first end wall 213. The adhesive layer 27 has a specific thickness, so that a specific space exists in the region, between the protective member 23 and the first end wall 213, in which the adhesive layer 27 is not disposed, to form the drainage channel 25.

The adhesive layer 27 implements a connection between the protective member 23 and the first end wall 213, so that the protective member 23 is firmly connected to the first end wall 213, and the region, between the protective member 23 and the first end wall 213, in which the adhesive layer 27 is not disposed forms the drainage channel 25, to facilitate processing and manufacturing, and reduce manufacturing difficulty.

According to some embodiments of this application, the housing 21 further includes the side wall 214, the side wall 214 is disposed around the first end wall 213, the first end wall 213 and the side wall 214 are connected to form the first connection portion 216, and viewing along the thickness direction Z of the first end wall 213, at least a part of the first connection portion 216 overlaps with the drainage channel 25.

A part of the first connection portion 216 may overlap with the drainage channel 25. To be specific, a part of the first connection portion 216 is connected to the protective member 23 by using the adhesive layer 27, and a region, between the first connection portion 216 and the protective member 23, in which the adhesive layer 27 is not disposed forms a part of the drainage channel 25. Alternatively, the whole first connection portion 216 may overlap with the drainage channel 25. To be specific, no adhesive layer 27 exists between the first connection portion 216 and the protective member 23, and the region between the first connection portion 216 and the protective member 23 forms a part of the drainage channel 25.

At least a part of the first connection portion 216 overlaps with the drainage channel 25, so that the liquid leaking from the first connection portion 216 enters the drainage channel 25 in a timely manner, and is guided by the drainage channel 25 to the second through hole 232 to be discharged.

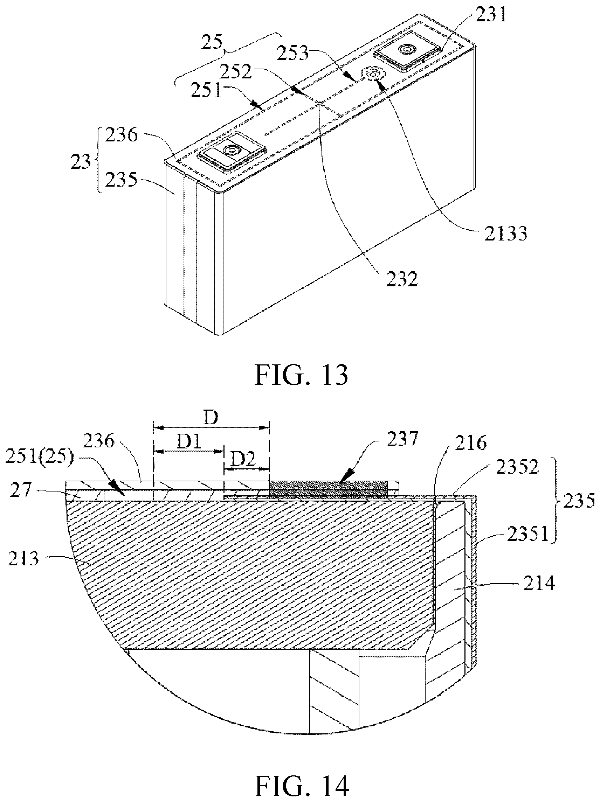

Referring to FIG. 3, and further referring to FIG. 13, FIG. 13 is a schematic diagram of assembly between a protective member and a housing according to some other embodiments of this application. According to some embodiments of this application, the housing 21 further includes the side wall 214, the side wall 214 is disposed around the first end wall 213, the protective member 23 includes a first protective sub-member 235 and a second protective sub-member 236, the first protective sub-member 235 includes a body portion 2351 and a flange portion 2352, the body portion 2351 covers at least a part of the outer surface of the side wall 214, the flange portion 2352 covers a part of the outer surface of the first end wall 213, and the second protective sub-member 236 covers a part of the outer surface of the first end wall 213 and a part of the flange portion 2352.

The body portion 2351 is a part of the first protective sub-member 235 that covers the side wall 214. The flange portion 2352 is a part of the first protective sub-member 235 that covers the first end wall 213. The body portion 2351 and the flange portion 2352 may be integrally formed. The body portion 2351 may cover a part of the side wall 214, or the body portion 2351 may cover the whole side wall 214.

The first protective sub-member 235 and the second protective sub-member 236 may be separately disposed components. The first protective sub-member 235 may first cover the side wall 214 and the first end wall 213, and then the second protective sub-member 236 covers the first end wall 213 and the flange portion 2352 of the first protective sub-member 235.

For example, a part of the first protective sub-member 235 may first cover the side wall 214 to form the body portion 2351, then a part of the first protective sub-member 235 may cover the first end wall 213 to form the flange portion 2352, and the second protective sub-member 236 covers the first end wall 213 and the flange portion 2352.

In some embodiments, the first protective sub-member 235 may be an insulating film, and the second protective sub-member 236 may be an insulating plate.

In the foregoing embodiment, the first protective sub-member 235 and the second protective sub-member 236 are separately disposed, the body portion 2351 of the first protective sub-member 235 covers a part of the outer surface of the side wall 214, the flange portion 2352 of the first protective sub-member 235 covers a part of the outer surface of the first end wall 213, and the second protective sub-member 236 covers a part of the outer surface of the first end wall 213 and a part of the flange portion 2352, to facilitate assembly between the protective member 23 and the first end wall 213 as well as the side wall 214, thereby reducing processing and manufacturing difficulty.

In an embodiment in which the housing 21 further includes the second end wall 215, the first protective sub-member 235 may cover at least a part of the second end wall 215. To be specific, the first protective sub-member 235 may flange toward the second end wall 215, to cover at least a part of the second end wall 215, so that the battery cell 20 has a relatively good insulating effect.

Referring to FIG. 13, and further referring to FIG. 14, FIG. 14 is a schematic diagram of cooperation between a second protective member and a first end wall according to some embodiments of this application. According to some embodiments of this application, the second protective sub-member 236 is connected to the first end wall 213 through the adhesive layer 27, and the region, between the second protective sub-member 236 and the first end wall 213, in which the adhesive layer 27 is not disposed forms the drainage channel 25.

The second protective sub-member 236 is connected to the first end wall 213 by using the adhesive layer 27, to fix the second protective sub-member 236, thereby facilitating cooperation between the second protective sub-member 236 and the first end wall 213.

The region, between the second protective sub-member 236 and the first end wall 213, in which the adhesive layer 27 is not disposed forms the drainage channel 25. A position of the drainage channel 25 may be defined by determining an application position of the adhesive layer 27, to facilitate formation of the drainage channel 25 and reduce processing and manufacturing difficulty.

Referring to FIG. 13, according to some embodiments of this application, the first through hole 231 and the second through hole 232 are provided on the second protective sub-member 236.

The first through hole 231 and the second through hole 232 may be through holes on the second protective sub-member 236. When the second protective sub-member 236 is assembled with the first end wall 213, the electrode terminal 22 may pass through the second protective sub-member 236, and the drainage channel 25 may be provided between the second protective sub-member 236 and the first end wall 213, to facilitate drainage of the liquid.

The first through hole 231 and the second through hole 232 are provided in the second protective sub-member 236, which not only facilitates assembly between the protective member 23 and the first end wall 213, but also facilitates drainage of the liquid between the protective member 23 and the first end wall 213.

Referring to FIG. 14, according to some embodiments of this application, the second protective sub-member 236 and the flange portion 2352 are connected in a hot melting manner to form a second connection portion 237.

A material of the second protective sub-member 236 may be the same as or different from a material of the first protective sub-member 235. The second protective sub-member 236 and the first protective sub-member 235 may be fused at high temperature, so that the second protective sub-member 236 and the flange portion 2352 may be connected in a hot melting manner.

The second connection portion 237 may be an annular structure, so that a joint between the second protective sub-member 236 and the flange portion 2352 is sealed.

The second protective sub-member 236 and the flange portion 2352 are connected in a hot melting manner, so that the second protective sub-member 236 is firmly connected to the flange portion 2352, to reduce a risk that the liquid leaks through the joint between the second protective sub-member 236 and the flange portion 2352.

Referring to FIG. 14, according to some embodiments of this application, one end of the flange portion 2352 away from the body portion 2351 extends out of the second connection portion 237.

One end of the flange portion 2352 that is away from the body portion 2351 extends out of the second connection portion 237. To be specific, hot melting positions of the second protective sub-member 236 and the flange portion 2352 do not extend to an edge of the flange portion 2352 that is away from the body portion 2351.

One end of the flange portion 2352 that is away from the body portion 2351 extends out of the second connection portion 237, so that a relatively large overlapping area exists between the second protective sub-member 236 and the flange portion 2352. In this way, the second protective sub-member 236 and the flange portion 2352 are hot-melted, and a connection between the second protective sub-member 236 and the flange portion 2352 is stable.

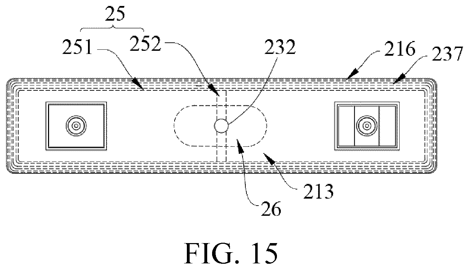

Referring to FIG. 14, and further referring to FIG. 15, FIG. 15 is a schematic diagram of a first connection portion and a second connection portion according to some embodiments of this application. According to some embodiments of this application, the first end wall 213 and the side wall 214 are connected to form the first connection portion 216, the flange portion 2352 covers the first connection portion 216, and the first connection portion 216 is disposed around the second connection portion 237.

The first connection portion 216 is disposed around the second connection portion 237, the second connection portion 237 may be an annular structure, and the first connection portion 216 may be an annular structure disposed around the second connection portion 237.

The first connection portion 216 is disposed around the second connection portion 237, so that the protective member 23 has a relatively good coverage effect on the first connection portion 216, to constrain the liquid that flows out through a cracked part of the first connection portion 216.

Referring to FIG. 14 and FIG. 15, according to some embodiments of this application, the drainage channel 25 includes the first sub-channel 251, the first sub-channel 251 is provided along the edge of the first end wall 213, and the second connection portion 237 is disposed around the first sub-channel 251.

The first sub-channel 251 may be an annular structure, the second connection portion 237 is disposed around the first sub-channel 251, and the first connection portion 216 is disposed around the second connection portion 237.

The second connection portion 237 is disposed around the first sub-channel 251. When the second connection portion 237 is formed by hot-melting the second protective sub-member 236 and the flange portion 2352, the joint between the second protective sub-member 236 and the flange portion 2352 is sealed. The first sub-channel 251 may be provided close to the first connection portion 216. When the joint between the first end wall 213 and the side wall 214 is cracked and the liquid flows out, it is convenient for the liquid to flow into the first sub-channel 251.

Referring to FIG. 14, according to some embodiments of this application, a distance between the second connection portion 237 and the first sub-channel 251 is D, and D satisfies: 5 mm≤D≤15 mm.

Optionally, the distance D between the second connection portion 237 and the first sub-channel 251 may be 5 mm, 6 mm, 7 mm, 8 mm, 9 mm, 10 mm, 11 mm, 12 mm, 13 mm, 14 mm, or 15 mm. The distance D between the second connection portion 237 and the first sub-channel 251 may alternatively be any other value between 5 mm and 15 mm.

If the distance D between the second connection portion 237 and the first sub-channel 251 is relatively small (for example, less than 5 mm), the relatively small distance between the second connection portion 237 and the first sub-channel 251 easily causes the flange portion 2352 to interfere with the first sub-channel 251, affecting a drainage effect. If the distance D between the second connection portion 237 and the first sub-channel 251 is relatively large (for example, greater than 15 mm), the relatively large distance between the first sub-channel 251 and the joint between the first end wall 213 and the side wall 214 is not beneficial for the liquid that flows out from the joint between the first end wall 213 and the side wall 214 to flow to the first sub-channel 251.

The distance D between the second connection portion 237 and the first sub-channel 251 satisfies the foregoing relationship. Interference of the flange portion 2352 on the first sub-channel 251 can be reduced. In addition, it is convenient for the liquid that flows out from the joint between the first end wall 213 and the side wall 214 to flow to the first sub-channel 251.

According to some embodiments of this application, 7 mm≤D≤12 mm.

Compared with D<7 mm, when D≥7 mm, the second connection portion 237 is relatively away from the first sub-channel 251, so that a risk of interference between the flange portion 2352 and the first sub-channel 251 can be reduced. Compared with D>12 mm, when D≤12 mm, the first sub-channel 251 may be relatively close to the joint between the first end wall 213 and the side wall 214, so that the liquid that flows out from the joint between the first end wall 213 and the side wall 214 flows to the first sub-channel 251.

Referring to FIG. 14, according to some embodiments of this application, a distance between one end of the flange portion 2352 that is away from the body portion 2351 and the first sub-channel 251 is D1, and the end of the flange portion 2352 that is away from the body portion 2351 extends out of the second connection portion 237. A size of the end of the flange portion 2352 that is away from the body portion 2351 and that extends out of the second connection portion 237 is D2, and the following relationships are satisfied: D=D1+D2, D1>0, and D2>0.

D2>0, to be specific, the end of the flange portion 2352 that is away from the body portion 2351 extends out of the second connection portion 237, thereby facilitating hot melting of the flange portion 2352 and the second protective sub-member 236. D1>0, to be specific, the flange portion 2352 does not extend to the first sub-channel 251, so that a risk that the flange portion 2352 covers the first sub-channel 251 is reduced, and drainage of the first sub-channel 251 becomes smooth.

Referring to FIG. 14, according to some embodiments of this application, viewing along the thickness direction Z of the first end wall 213, the drainage channel 25 does not overlap with the flange portion 2352.

In an embodiment in which the second protective sub-member 236 is connected to the first end wall 213 by using the adhesive layer 27, and the region, between the second protective sub-member 236 and the first end wall 213, in which the adhesive layer 27 is not disposed forms the drainage channel 25, the flange portion 2352 does not extend to the drainage channel 25. That is, a specific distance exists between the edge of the flange portion 2352 that is away from the body portion 2351 and the drainage channel 25.

The drainage channel 25 does not overlap with the flange portion 2352, and blocking of the drainage channel 25 to the flange portion 2352 is reduced, so that the drainage channel 25 can have a relatively large drainage space, and has a relatively good drainage effect.

According to some embodiments of this application, an embodiment of this application further provides a battery 100. The battery 100 may include the battery cell 20 according to any of the foregoing embodiments.

The battery 100 may further include other components such as an insulating component and a circuit board. The circuit board is electrically connected to a plurality of battery cells 20, and the insulating component may be disposed between the circuit board and the plurality of battery cells 20. A third through hole corresponding to the second through hole 232 may be provided on the insulating component and the circuit board. When liquid is discharged from the second through hole 232, the liquid may flow through the third through hole, to reduce a risk of a short circuit caused by contact between the liquid and a conductive component.

According to some embodiments of this application, an embodiment of this application further provides a power consuming device. The power consuming device may include the battery cell 20 or the battery 100 according to any of the foregoing embodiments.

The battery cell 20 or the battery 100 is configured to provide electric energy for the power consuming device. The power consuming device may be any one of the foregoing devices or systems to which the battery cell 20 or the battery 100 is applied.

According to some embodiments of this application, referring to FIG. 3 to FIG. 5 and FIG. 7 to FIG. 12, an embodiment of this application provides a battery cell 20. The battery cell 20 is in a shape of a cuboid. The battery cell 20 may include a housing 21, an electrode terminal 22, an electrode assembly 24, a pressure relief mechanism 26, an adapting member 28, and a protective member 23.

The housing 21 may include a first end wall 213, a side wall 214, and a second end wall 215. The first end wall 213 and the second end wall 215 are oppositely disposed along a thickness direction Z of the first end wall 213. The side wall 214 is disposed around the first end wall 213 and the second end wall 215. The first end wall 213, the side wall 214, and the second end wall 215 enclose an accommodating space. The first end wall 213 may be an end cap 212, the side wall 214 and the second end wall 215 may be integrally formed into a shell 211, and the end cap 212 closes an opening of the shell 211. The first end wall 213 and the side wall 214 are connected to form a first connection portion 216.

A liquid injection hole 2133 is provided on the first end wall 213. The liquid injection hole 2133 is a step hole. The liquid injection hole 2133 may include a first hole segment 2133a and a second hole segment 2133b. The first hole segment 2133a may be provided around the second hole segment 2133b. A cross-sectional area of the first hole segment 2133a may be greater than a cross-sectional area of the second hole segment 2133b. The second hole segment 2133b is sealed by a sealing member. A drainage groove 2131 and a groove 2132 are provided on an outer surface of the first end wall 213. The drainage groove 2131 includes a first groove segment 2131a, a second groove segment 2131b, and a third groove segment 2131c. The first groove segment 2131a is an annular structure. The first groove segment 2131a is provided close to the first connection portion 216. The first groove segment 2131a is provided around the groove 2132. The pressure relief mechanism 26 is disposed on a bottom wall of the groove 2132. The second groove segment 2131b communicates the first groove segment 2131a with the groove 2132. The third groove segment 2131c is communicates the groove 2132 with the first hole segment 2133a.

The electrode terminal 22 is disposed on the first end wall 213, the electrode assembly 24 is disposed in the accommodating space, and the electrode assembly 24 is electrically connected to the electrode terminal 22 by using the adapting member 28.

The protective member 23 may be an insulating film. The protective member 23 may cover the first end wall 213, a part of the side wall 214, and a part of the second end wall 215. The protective member 23 is adhered to the housing 21. A first through hole 231 and a second through hole 232 are provided on the protective member 23, and the electrode terminal 22 is exposed in the first through hole 231. A gap Q exists between the protective member 23 and the pressure relief mechanism 26 along the thickness direction Z of the first end wall 213. The protective member 23 covers the drainage groove 2131 and the groove 2132, to form a drainage channel 25. The drainage channel 25 includes a first sub-channel 251, a second sub-channel 252, and a third sub-channel 253. The protective member 23 covers the first groove segment 2131a to form a first sub-channel 251. The protective member 23 covers the second groove segment 2131b to form a second sub-channel 252. The second sub-channel 252 communicates the first sub-channel 251 with the second through hole 232. The protective member 23 covers the third groove segment 2131c to form a third sub-channel 253. One end of the third sub-channel 253 extends to the liquid injection hole 2133. The other end of the third sub-channel 253 is in communication with the second through hole 232. The second through hole 232 is configured to discharge liquid located between the protective member 23 and the first end wall 213. Viewing along the thickness direction Z of the first end wall 213, the second through hole 232 at least partially overlaps with the pressure relief mechanism 26.

According to some embodiments of this application, referring to FIG. 3, FIG. 4, and FIG. 6 to FIG. 11, an embodiment of this application provides a battery cell 20. The battery cell 20 is in a shape of a cuboid. The battery cell 20 may include a housing 21, an electrode terminal 22, an electrode assembly 24, a pressure relief mechanism 26, an adhesive layer 27, an adapting member 28, and a protective member 23.

The housing 21 may include a first end wall 213, a side wall 214, and a second end wall 215. The first end wall 213 and the second end wall 215 are oppositely disposed along a thickness direction Z of the first end wall 213. The side wall 214 is disposed around the first end wall 213 and the second end wall 215. The first end wall 213, the side wall 214, and the second end wall 215 enclose an accommodating space. The first end wall 213 may be an end cap 212, the side wall 214 and the second end wall 215 may be integrally formed into a shell 211, and the end cap 212 closes an opening of the shell 211. The first end wall 213 and the side wall 214 are connected to form a first connection portion 216. A groove 2132 is provided on the first end wall 213, and the pressure relief mechanism 26 is disposed in the groove 2132.

A liquid injection hole 2133 is provided on the first end wall 213. The liquid injection hole 2133 is a step hole. The liquid injection hole 2133 may include a first hole segment 2133a and a second hole segment 2133b. The first hole segment 2133a may be provided around the second hole segment 2133b. A cross-sectional area of the first hole segment 2133a may be greater than a cross-sectional area of the second hole segment 2133b. The second hole segment 2133b is sealed by a sealing member.

The electrode terminal 22 is disposed on the first end wall 213, the electrode assembly 24 is disposed in the accommodating space, and the electrode assembly 24 is electrically connected to the electrode terminal 22 by using the adapting member 28.

The protective member 23 may be an insulating film. The protective member 23 may cover the first end wall 213, a part of the side wall 214, and a part of the second end wall 215. The protective member 23 and the first end wall 213 are connected through the adhesive layer 27, and a region, between the protective member 23 and the first end wall 213, in which the adhesive layer 27 is not disposed forms a drainage channel 25. A first through hole 231 and a second through hole 232 are provided on the protective member 23, and the electrode terminal 22 is exposed in the first through hole 231. The second through hole 232 is in communication with the drainage channel 25. The second through hole 232 is configured to discharge liquid located between the protective member 23 and the first end wall 213. A gap Q exists between the protective member 23 and the pressure relief mechanism 26 along the thickness direction Z of the first end wall 213. Viewing along the thickness direction Z of the first end wall 213, the second through hole 232 at least partially overlaps with the pressure relief mechanism 26.

The drainage channel 25 includes a first sub-channel 251, a second sub-channel 252, and a third sub-channel 253. The first sub-channel 251 is provided close to the first connection portion 216, the first sub-channel 251 is an annular structure, and the first connection portion 216 surrounds the first sub-channel 251. The second sub-channel 252 communicates the first sub-channel 251 with the second through hole 232. One end of the third sub-channel 253 extends to the liquid injection hole 2133, and the other end of the third sub-channel 253 is in communication with the second through hole 232.

According to some embodiments of this application, referring to FIG. 3, FIG. 4, FIG. 6 to FIG. 11, and FIG. 13 to FIG. 15, an embodiment of this application provides a battery cell 20. The battery cell 20 is in a shape of a cuboid. The battery cell 20 may include a housing 21, an electrode terminal 22, an electrode assembly 24, a pressure relief mechanism 26, an adhesive layer 27, an adapting member 28, and a protective member 23.

The housing 21 may include a first end wall 213, a side wall 214, and a second end wall 215. The first end wall 213 and the second end wall 215 are oppositely disposed along a thickness direction Z of the first end wall 213. The side wall 214 is disposed around the first end wall 213 and the second end wall 215. The first end wall 213, the side wall 214, and the second end wall 215 enclose an accommodating space. The first end wall 213 may be an end cap 212, the side wall 214 and the second end wall 215 may be integrally formed into a shell 211, and the end cap 212 closes an opening of the shell 211. The first end wall 213 and the side wall 214 are connected to form a first connection portion 216. A groove 2132 is provided on the first end wall 213, and the pressure relief mechanism 26 is disposed in the groove 2132.

A liquid injection hole 2133 is provided on the first end wall 213. The liquid injection hole 2133 is a step hole. The liquid injection hole 2133 may include a first hole segment 2133a and a second hole segment 2133b. The first hole segment 2133a may be provided around the second hole segment 2133b. A cross-sectional area of the first hole segment 2133a may be greater than a cross-sectional area of the second hole segment 2133b. The second hole segment 2133b is sealed by a sealing member.

The electrode terminal 22 is disposed on the first end wall 213, the electrode assembly 24 is disposed in the accommodating space, and the electrode assembly 24 is electrically connected to the electrode terminal 22 by using the adapting member 28.

The protective member 23 may include a first protective sub-member 235 and a second protective sub-member 236. The first protective sub-member 235 and the second protective sub-member 236 are separately disposed. The first protective sub-member 235 may be an insulating film, and the second protective sub-member 236 may be an insulating plate. The first protective sub-member 235 may include a body portion 2351 and a flange portion 2352. The body portion 2351 covers at least a part of an outer surface of the side wall 214, and the flange portion 2352 covers a part of an outer surface of the first end wall 213. The second protective sub-member 236 covers a part of the outer surface of the first end wall 213 and a part of the flange portion 2352. The second protective sub-member 236 and the flange portion 2352 are connected in a hot melting manner to form a second connection portion 237. The second connection portion 237 is an annular structure, and the first connection portion 216 is disposed around the second connection portion 237.

The second protective sub-member 236 is connected to the first end wall 213 through the adhesive layer 27, and a region, between the second protective sub-member 236 and the first end wall 213, in which the adhesive layer 27 is not disposed forms a drainage channel 25. A first through hole 231 and a second through hole 232 are provided on the second protective sub-member 236, and the electrode terminal 22 is exposed in the first through hole 231. The second through hole 232 is in communication with the drainage channel 25. The second through hole 232 is configured to discharge liquid located between the protective member 23 and the first end wall 213. A gap Q exists between the protective member 23 and the pressure relief mechanism 26 along the thickness direction Z of the first end wall 213. Viewing along the thickness direction Z of the first end wall 213, the second through hole 232 at least partially overlaps with the pressure relief mechanism 26.

The drainage channel 25 includes a first sub-channel 251, a second sub-channel 252, and a third sub-channel 253. The first sub-channel 251 is provided close to the second connection portion 237, the first sub-channel 251 is an annular structure, and the second connection portion 237 is disposed around the first sub-channel 251. The second sub-channel 252 communicates the first sub-channel 251 with the second through hole 232. One end of the third sub-channel 253 extends to the liquid injection hole 2133, and the other end of the third sub-channel 253 is in communication with the second through hole 232.

Although this application has been described with reference to the preferred embodiments, various modifications may be made thereto as long as there is no structural conflict, the various technical features mentioned in each embodiment can be combined in any way. This application is not limited to the particular embodiments disclosed herein, but includes all technical solutions that fall within the scope of the claims.

## Claims

1. A battery cell (20), comprising:
a housing (21), comprising a first end wall (213);
an electrode terminal (22), disposed on the first end wall (213); and
a protective member (23), covering an outer surface of the first end wall (213), wherein a first through hole (231) and a second through hole (232) are provided on the protective member (23), the first through hole (231) is configured to expose the electrode terminal (22), a drainage channel (25) is formed between the protective member (23) and the first end wall (213), and the drainage channel (25) is in communication with the second through hole (232).

2. The battery cell (20) according to claim 1, wherein the housing (21) further comprises a side wall (214), the side wall (214) is disposed around the first end wall (213), the protective member (23) comprises a first part (233) and a second part (234), the first part (233) covers the outer surface of the first end wall (213), the second part (234) is disposed around the first part (233), and the second part (234) covers at least a part of an outer surface of the side wall (214) and preferably the drainage channel (25) is provided between the first part (233) and the first end wall (213).

3. The battery cell (20) according to claim 2, wherein the first end wall (213) and the side wall (214) are connected to form a first connection portion (216), and the protective member (23) covers the first connection portion (216), and preferably
the drainage channel (25) comprises a first sub-channel (251), the first sub-channel (251) is provided along an edge of the first end wall (213), and the first connection portion (216) is disposed around the first sub-channel (251)
and more preferably a distance between the first connection portion (216) and the first sub-channel (251) is L1, and L1 satisfies: 1 mm≤L1≤4 mm, and more preferably$2 mm \leq L 1 \leq 3 mm .$

4. The battery cell (20) according to claim 3, wherein the drainage channel (25) further comprises a second sub-channel (252), and the second sub-channel (252) communicates the first sub-channel (251) with the second through hole (232).

5. The battery cell (20) according to any one of claims 1 to 4, wherein the battery cell (20) further comprises:
a pressure relief mechanism (26), disposed on the first end wall (213), wherein
the protective member (23) covers the pressure relief mechanism (26) and preferably
viewing along a thickness direction Z of the first end wall (213), the pressure relief mechanism (26) at least partially overlaps with the second through hole (232).

6. The battery cell (20) according to claim 5, wherein a gap Q exists between the pressure relief mechanism (26) and the protective member (23) along a thickness direction Z of the first end wall (213).

7. The battery cell (20) according to any one of claims 1 to 6, wherein a liquid injection hole (2133) is provided on the first end wall (213), and the protective member (23) covers the liquid injection hole (2133) and preferably
the drainage channel (25) further comprises a third sub-channel (253), one end of the third sub-channel (253) extends to the liquid injection hole (2133), and the other end of the third sub-channel (253) is in communication with the second through hole (232).

8. The battery cell (20) according to any one of claims 1 to 7, wherein a drainage groove (2131) is provided on the outer surface of the first end wall (213), and the protective member (23) covers the drainage groove (2131) to form the drainage channel (25and preferably the battery cell (20) further comprises:
the pressure relief mechanism (26), disposed on the first end wall (213), wherein the protective member (23) covers the pressure relief mechanism (26); and
a groove (2132) is further provided on the outer surface of the first end wall (213), the pressure relief mechanism (26) is disposed in the groove (2132), and the drainage groove (2131) is in communication with the groove (2132).

9. The battery cell (20) according to any one of claims 1 to 8, wherein the battery cell (20) further comprises:
an adhesive layer (27), wherein the protective member (23) and the first end wall (213) are connected through the adhesive layer (27), and a region, between the protective member (23) and the first end wall (213), in which the adhesive layer (27) is not disposed forms the drainage channel (25) .

10. The battery cell according to claim 9, wherein the housing (21) further comprises the side wall (214), the side wall (214) is disposed around the first end wall (213), the first end wall (213) and the side wall (214) are connected to form the first connection portion (216), and viewing along the thickness direction Z of the first end wall (213), at least a part of the first connection portion (216) overlaps with the drainage channel (25)

11. The battery cell according to claim 9, wherein the housing (21) further comprises the side wall (214), the side wall (214) is disposed around the first end wall (213), the protective member (23) comprises a first protective sub-member (235) and a second protective sub-member (236), the first protective sub-member (235) comprises a body portion (2351) and a flange portion (2352), the body portion (2351) covers at least a part of the outer surface of the side wall (214), the flange portion (2352) covers a part of the outer surface of the first end wall (213), and the second protective sub-member (236) covers a part of the outer surface of the first end wall (213) and a part of the flange portion (2352).

12. The battery cell (20) according to claim 11, wherein the second protective sub-member (236) is connected to the first end wall (213) through the adhesive layer (27), and a region, between the second protective sub-member (236) and the first end wall (213), in which the adhesive layer (27) is not disposed forms the drainage channel (25), or
the first through hole (231) and the second through hole (232) are provided on the second protective sub-member (236), or
the second protective sub-member (236) and the flange portion (2352) are connected in a hot melting manner to form a second connection portion (237) and preferably .
one end of the flange portion (2352) away from the body portion (2351) extends out of the second connection portion (237), or
the first end wall (213) and the side wall (214) are connected to form the first connection portion (216), the flange portion (2352) covers the first connection portion (216), and the first connection portion (216) is disposed around the second connection portion (237), or
the drainage channel (25) comprises the first sub-channel (251), the first sub-channel (251) is provided along the edge of the first end wall (213), and the second connection portion (237) is disposed around the first sub-channel (251), and preferably
a distance between the second connection portion (237) and the first sub-channel (251) is D, and D satisfies: 5 mm≤D≤15 mm, and more preferably$7 mm \leq D \leq 12 mm .$
7 mm≤D≤12 mm.

13. The battery cell (20) according to any one of claims 11 or 12, wherein viewing along the thickness direction Z of the first end wall (213), the drainage channel (25) does not overlap with the flange portion (2352).

14. A battery (100), comprising the battery cell (20) according to any one of claims 1 to 12.

15. A power consuming device, comprising the battery cell (20) according to any one of claims 1 to 13 or the battery (100) according to claim 14.

## Patentansprüche

1. Batteriezelle (20), umfassend:
ein Gehäuse (21), das eine erste Stirnwand (213) umfasst;
einen Elektrodenanschluss (22), der an der ersten Stirnwand (213) angeordnet ist; und
ein Schutzelement (23), das eine Außenfläche der ersten Stirnwand (213) abdeckt, wobei an dem Schutzelement (23) ein erstes Durchgangsloch (231) und ein zweites Durchgangsloch (232) vorgesehen sind, wobei das erste Durchgangsloch (231) so ausgebildet ist, dass es den Elektrodenanschluss (22) freilegt, zwischen dem Schutzelement (23) und der ersten Stirnwand (213) ein Abflusskanal (25) ausgebildet ist und der Abflusskanal (25) mit dem zweiten Durchgangsloch (232) in Verbindung steht.

2. Batteriezelle (20) nach Anspruch 1, wobei das Gehäuse (21) ferner eine Seitenwand (214) umfasst, die Seitenwand (214) um die erste Stirnwand (213) herum angeordnet ist, das Schutzelement (23) einen ersten Teil (233) und einen zweiten Teil (234) umfasst, wobei der erste Teil (233) die Außenfläche der ersten Stirnwand (213) bedeckt, der zweite Teil (234) ist um den ersten Teil (233) herum angeordnet, und der zweite Teil (234) bedeckt zumindest einen Teil einer Außenfläche der Seitenwand (214), und vorzugsweise ist der Abflusskanal (25) zwischen dem ersten Teil (233) und der ersten Stirnwand (213) vorgesehen.

3. Batteriezelle (20) nach Anspruch 2, wobei die erste Stirnwand (213) und die Seitenwand (214) miteinander verbunden sind, um einen ersten Verbindungsabschnitt (216) zu bilden, und das Schutzelement (23) den ersten Verbindungsabschnitt (216) bedeckt, und vorzugsweise
der Abflusskanal (25) einen ersten Teilkanal (251) umfasst, der erste Teilkanal (251) entlang einer Kante der ersten Stirnwand (213) vorgesehen ist und der erste Verbindungsabschnitt (216) um den ersten Teilkanal (251) herum angeordnet ist
und noch bevorzugter beträgt der Abstand zwischen dem ersten Verbindungsabschnitt (216) und dem ersten Teilkanal (251) L1, wobei L1 die folgende Bedingung erfüllt: 1 mm ≤ L1 ≤ 4 mm, und noch bevorzugter$2 mm \leq L 1 \leq 3 mm .$

4. Batteriezelle (20) nach Anspruch 3, wobei der Abflusskanal (25) ferner einen zweiten Teilkanal (252) umfasst und der zweite Teilkanal (252) den ersten Teilkanal (251) mit dem zweiten Durchgangsloch (232) verbindet.

5. Batteriezelle (20) nach einem der Ansprüche 1 bis 4, wobei die Batteriezelle (20) ferner umfasst:
einen Druckentlastungsmechanismus (26), der an der ersten Stirnwand (213) angeordnet ist, wobei
das Schutzelement (23) den Druckentlastungsmechanismus (26) abdeckt und vorzugsweise
bei Betrachtung entlang der Dickenrichtung Z der ersten Stirnwand (213) der Druckentlastungsmechanismus (26) zumindest teilweise mit dem zweiten Durchgangsloch (232) überlappt.

6. Batteriezelle (20) nach Anspruch 5, wobei zwischen dem Druckentlastungsmechanismus (26) und dem Schutzelement (23) entlang der Dickenrichtung Z der ersten Stirnwand (213) ein Spalt Q vorhanden ist.

7. Batteriezelle (20) nach einem der Ansprüche 1 bis 6, wobei an der ersten Stirnwand (213) eine Flüssigkeitseinfüllöffnung (2133) vorgesehen ist und das Schutzelement (23) die Flüssigkeitseinfüllöffnung (2133) abdeckt und vorzugsweise
Der Abflusskanal (25) umfasst ferner einen dritten Teilkanal (253), wobei sich ein Ende des dritten Teilkanals (253) bis zur Flüssigkeitseinfüllöffnung (2133) erstreckt und das andere Ende des dritten Teilkanals (253) mit dem zweiten Durchgangsloch (232) in Verbindung steht.

8. Batteriezelle (20) gemäß einem der Ansprüche 1 bis 7, wobei an der Außenfläche der ersten Stirnwand (213) eine Abflussnut (2131) vorgesehen ist und das Schutzelement (23) die Abflussnut (2131) abdeckt, um den Abflusskanal (25) zu bilden, und wobei die Batteriezelle (20) vorzugsweise ferner umfasst:
einen Druckentlastungsmechanismus (26), der an der ersten Stirnwand (213) angeordnet ist, wobei das Schutzelement (23) den Druckentlastungsmechanismus (26) abdeckt; und
an der Außenfläche der ersten Stirnwand (213) ist ferner eine Nut (2132) vorgesehen, der Druckentlastungsmechanismus (26) ist in der Nut (2132) angeordnet, und die Abflussnut (2131) steht mit der Nut (2132) in Verbindung.

9. Batteriezelle (20) nach einem der Ansprüche 1 bis 8, wobei die Batteriezelle (20) ferner umfasst:
eine Klebeschicht (27), wobei das Schutzelement (23) und die erste Stirnwand (213) durch die Klebeschicht (27) miteinander verbunden sind, und ein Bereich zwischen dem Schutzelement (23) und der ersten Stirnwand (213), in dem die Klebeschicht (27) nicht angeordnet ist, den Abflusskanal (25) bildet.

10. Die Batteriezelle nach Anspruch 9, wobei das Gehäuse (21) ferner die Seitenwand (214) umfasst, die Seitenwand (214) um die erste Stirnwand (213) herum angeordnet ist, die erste Stirnwand (213) und die Seitenwand (214) miteinander verbunden sind, um den ersten Verbindungsabschnitt (216) zu bilden, und bei Betrachtung entlang der Dickenrichtung Z der ersten Stirnwand (213) zumindest ein Teil des ersten Verbindungsabschnitts (216) den Abflusskanal (25) überlappt.

11. Batteriezelle nach Anspruch 9, wobei das Gehäuse (21) ferner die Seitenwand (214) umfasst, die Seitenwand (214) um die erste Stirnwand (213) herum angeordnet ist, das Schutzelement (23) ein erstes Schutzunterelement (235) und ein zweites Schutzunterelement (236) umfasst, das erste Schutzunterelement (235) einen Körperabschnitt (2351) und einen Flanschabschnitt (2352) umfasst, der Körperabschnitt (2351) mindestens einen Teil der Außenfläche der Seitenwand (214) bedeckt, der Flanschabschnitt (2352) einen Teil der Außenfläche der ersten Stirnwand (213) abdeckt, und das zweite Schutzunterelement (236) einen Teil der Außenfläche der ersten Stirnwand (213) und einen Teil des Flanschabschnitts (2352) abdeckt.

12. Batteriezelle (20) nach Anspruch 11, wobei das zweite Schutzunterelement (236) über die Klebeschicht (27) mit der ersten Stirnwand (213) verbunden ist, und ein Bereich zwischen dem zweiten Schutzunterelement (236) und der ersten Stirnwand (213), in dem die Klebeschicht (27) nicht angeordnet ist, den Abflusskanal (25) bildet, oder
das erste Durchgangsloch (231) und das zweite Durchgangsloch (232) an dem zweiten Schutzunterelement (236) vorgesehen sind, oder
das zweite Schutzunterelement (236) und der Flanschabschnitt (2352) durch Heißkleben verbunden sind, um einen zweiten Verbindungsabschnitt (237) zu bilden, und vorzugsweise .
ein vom Körperabschnitt (2351) abgewandtes Ende des Flanschabschnitts (2352) aus dem zweiten Verbindungsabschnitt (237) herausragt, oder
die erste Stirnwand (213) und die Seitenwand (214) sind miteinander verbunden, um den ersten Verbindungsabschnitt (216) zu bilden, der Flanschabschnitt (2352) bedeckt den ersten Verbindungsabschnitt (216), und der erste Verbindungsabschnitt (216) ist um den zweiten Verbindungsabschnitt (237) herum angeordnet, oder
der Abflusskanal (25) den ersten Teilkanal (251) umfasst, der erste Teilkanal (251) entlang der Kante der ersten Stirnwand (213) vorgesehen ist und der zweite Verbindungsabschnitt (237) um den ersten Teilkanal (251) herum angeordnet ist, und vorzugsweise
ein Abstand zwischen dem zweiten Verbindungsabschnitt (237) und dem ersten Teilkanal (251) D beträgt, und D die folgende Bedingung erfüllt: 5 mm ≤ D ≤ 15 mm, und noch bevorzugter $7 mm \leq D \leq 12 mm .$

13. Batteriezelle (20) gemäß einem der Ansprüche 11 oder 12, wobei bei Betrachtung entlang der Dickenrichtung Z der ersten Stirnwand (213) der Abflusskanal (25) den Flanschabschnitt (2352) nicht überlappt.

14. Batterie (100), die die Batteriezelle (20) gemäß einem der Ansprüche 1 bis 12 umfasst.

15. Stromverbraucher, der die Batteriezelle (20) gemäß einem der Ansprüche 1 bis 13 oder die Batterie (100) gemäß Anspruch 14 umfasst.

## Revendications

1. Cellule de batterie (20), comprenant :
un boîtier (21), comprenant une première paroi d'extrémité (213) ;
une borne d'électrode (22), disposée sur la première paroi d'extrémité (213) ; et
un élément de protection (23), recouvrant une surface extérieure de la première paroi d'extrémité (213), dans laquelle un premier trou traversant (231) et un deuxième trou traversant (232) sont prévus sur l'élément de protection (23), le premier trou traversant (231) étant configuré pour exposer la borne d'électrode (22), un canal de drainage (25) étant formé entre l'élément de protection (23) et la première paroi d'extrémité (213), et le canal de drainage (25) étant en communication avec le deuxième trou traversant (232).

2. Cellule de batterie (20) selon la revendication 1, dans laquelle le boîtier (21) comprend en outre une paroi latérale (214), la paroi latérale (214) étant disposée autour de la première paroi d'extrémité (213), l'élément de protection (23) comprend une première partie (233) et une deuxième partie (234), la première partie (233) recouvre la surface extérieure de la première paroi d'extrémité (213), la deuxième partie (234) est disposée autour de la première partie (233), et la deuxième partie (234) recouvre au moins une partie de la surface extérieure de la paroi latérale (214) et, de préférence, le canal de drainage (25) est prévu entre la première partie (233) et la première paroi d'extrémité (213).

3. Cellule de batterie (20) selon la revendication 2, dans laquelle la première paroi d'extrémité (213) et la paroi latérale (214) sont reliées pour former une première partie de raccordement (216), et l'élément de protection (23) recouvre la première partie de raccordement (216), et de préférence
le canal de drainage (25) comprend un premier sous-canal (251), le premier sous-canal (251) est prévu le long d'un bord de la première paroi d'extrémité (213), et la première partie de raccordement (216) est disposée autour du premier sous-canal (251)
et, de préférence encore, la distance entre la première partie de raccordement (216) et le premier sous-canal (251) est égale à L1, et L1 satisfait à la relation : 1 mm ≤ L1 ≤ 4 mm, et, de préférence encore, $2 mm \leq L 1 \leq 3 mm .$

4. Cellule de batterie (20) selon la revendication 3, dans laquelle le canal de drainage (25) comprend en outre un deuxième sous-canal (252), et le deuxième sous-canal (252) relie le premier sous-canal (251) au deuxième trou traversant (232).

5. Cellule de batterie (20) selon l'une quelconque des revendications 1 à 4, dans laquelle la cellule de batterie (20) comprend en outre :
un mécanisme de décompression (26), disposé sur la première paroi d'extrémité (213), dans laquelle
l'élément de protection (23) recouvre le mécanisme de décompression (26) et, de préférence,
vu dans la direction de l'épaisseur Z de la première paroi d'extrémité (213), le mécanisme de décompression (26) chevauche au moins partiellement le deuxième trou traversant (232).

6. Cellule de batterie (20) selon la revendication 5, dans laquelle un espace Q existe entre le mécanisme de décompression (26) et l'élément de protection (23) le long de la direction de l'épaisseur Z de la première paroi d'extrémité (213).

7. Cellule de batterie (20) selon l'une quelconque des revendications 1 à 6, dans laquelle un orifice d'injection de liquide (2133) est prévu sur la première paroi d'extrémité (213), et l'élément de protection (23) recouvre l'orifice d'injection de liquide (2133) et, de préférence,
le canal de drainage (25) comprend en outre un troisième sous-canal (253), dont une extrémité s'étend jusqu'à l'orifice d'injection de liquide (2133), tandis que l'autre extrémité est en communication avec le deuxième trou traversant (232).

8. Cellule de batterie (20) selon l'une quelconque des revendications 1 à 7, dans laquelle une rainure de drainage (2131) est prévue sur la surface extérieure de la première paroi d'extrémité (213), et l'élément de protection (23) recouvre la rainure de drainage (2131) pour former le canal de drainage (25), et de préférence, la cellule de batterie (20) comprend en outre :
un mécanisme de décompression (26), disposé sur la première paroi d'extrémité (213), l'élément de protection (23) recouvrant le mécanisme de décompression (26) ; et
une rainure (2132) est en outre prévue sur la surface extérieure de la première paroi d'extrémité (213), le mécanisme de décompression (26) est disposé dans la rainure (2132), et la rainure de drainage (2131) communique avec la rainure (2132).

9. Cellule de batterie (20) selon l'une quelconque des revendications 1 à 8, dans laquelle la cellule de batterie (20) comprend en outre :
une couche adhésive (27), dans laquelle l'élément de protection (23) et la première paroi d'extrémité (213) sont reliés par la couche adhésive (27), et une zone, située entre l'élément de protection (23) et la première paroi d'extrémité (213), dans laquelle la couche adhésive (27) n'est pas disposée, forme le canal de drainage (25).

10. Cellule de batterie selon la revendication 9, dans laquelle le boîtier (21) comprend en outre la paroi latérale (214), la paroi latérale (214) étant disposée autour de la première paroi d'extrémité (213), la première paroi d'extrémité (213) et la paroi latérale (214) sont reliées pour former la première partie de raccordement (216), et, vu dans la direction de l'épaisseur Z de la première paroi d'extrémité (213), au moins une partie de la première partie de raccordement (216) chevauche le canal de drainage (25).

11. Cellule de batterie selon la revendication 9, dans laquelle le boîtier (21) comprend en outre la paroi latérale (214), la paroi latérale (214) est disposée autour de la première paroi d'extrémité (213), l'élément de protection (23) comprend un premier sous-élément de protection (235) et un deuxième sous-élément de protection (236), le premier sous-élément de protection (235) comprend une partie formant corps (2351) et une partie formant rebord (2352), la partie formant corps (2351) recouvre au moins une partie de la surface extérieure de la paroi latérale (214), la partie formant rebord (2352) recouvre une partie de la surface extérieure de la première paroi d'extrémité (213), et le deuxième sous-élément de protection (236) recouvre une partie de la surface extérieure de la première paroi d'extrémité (213) et une partie de la partie formant rebord (2352).

12. Cellule de batterie (20) selon la revendication 11, dans laquelle le deuxième sous-élément de protection (236) est relié à la première paroi d'extrémité (213) par l'intermédiaire de la couche adhésive (27), et une zone, située entre le deuxième sous-élément de protection (236) et la première paroi d'extrémité (213), dans laquelle la couche adhésive (27) n'est pas disposée, forme le canal de drainage (25), ou
le premier trou traversant (231) et le deuxième trou traversant (232) sont prévus sur le deuxième sous-élément de protection (236), ou
le deuxième sous-élément de protection (236) et la partie formant rebord (2352) sont assemblés par thermofusion pour former une deuxième partie de raccordement (237) et, de préférence,
une extrémité de la partie formant rebord (2352) éloignée de la partie formant corps (2351) s'étend hors de la deuxième partie de raccordement (237), ou
la première paroi d'extrémité (213) et la paroi latérale (214) sont reliées pour former la première partie de raccordement (216), la partie formant rebord (2352) recouvre la première partie de raccordement (216), et la première partie de raccordement (216) est disposée autour de la deuxième partie de raccordement (237), ou
le canal de drainage (25) comprend le premier sous-canal (251), le premier sous-canal (251) est prévu le long du bord de la première paroi d'extrémité (213), et la deuxième partie de raccordement (237) est disposée autour du premier sous-canal (251), et de préférence
la distance entre la deuxième partie de raccordement (237) et le premier sous-canal (251) est égale à D, et D satisfait à la relation : 5 mm ≤ D ≤ 15 mm, et de préférence $7 mm \leq D \leq 12 mm .$

13. Cellule de batterie (20) selon l'une quelconque des revendications 11 ou 12, dans laquelle, vu dans la direction de l'épaisseur Z de la première paroi d'extrémité (213), le canal de drainage (25) ne chevauche pas la partie formant rebord (2352).

14. Batterie (100), comprenant la cellule de batterie (20) selon l'une quelconque des revendications 1 à 12.

15. Dispositif consommateur d'énergie, comprenant la cellule de batterie (20) selon l'une quelconque des revendications 1 à 13 ou la batterie (100) selon la revendication 14.
